(19) **Europäisches Patentamt / European Patent Office / Office européen des brevets**

(11) **EP 4 277 346 A1**

(12) # EUROPEAN PATENT APPLICATION
published in accordance with Art. 153(4) EPC

(43) Date of publication:
**15.11.2023 Bulletin 2023/46**

(21) Application number: **21930775.8**

(22) Date of filing: **17.03.2021**

(51) International Patent Classification (IPC):
**H04W 28/18** (2009.01)     **H04W 16/04** (2009.01)
**H04W 52/04** (2009.01)

(52) Cooperative Patent Classification (CPC):
**H04W 16/04; H04W 28/18; H04W 52/04**

(86) International application number:
**PCT/CN2021/081344**

(87) International publication number:
**WO 2022/193182 (22.09.2022 Gazette 2022/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
- **CHEN, Erkai**
  **Shenzhen, Guangdong 518129 (CN)**
- **WU, Kedi**
  **Shenzhen, Guangdong 518129 (CN)**
- **DOU, Shengyue**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **TRANSMISSION PARAMETER ADJUSTING METHOD AND COMMUNICATION DEVICE**

(57) This application provides a transmission parameter adjustment method and a communication apparatus. The transmission parameter adjustment method includes: increasing a downlink transmission bandwidth of a service from a first downlink transmission bandwidth to a second downlink transmission bandwidth, where the second downlink transmission bandwidth is less than or equal to a target downlink transmission bandwidth, and the target downlink transmission bandwidth is a smaller value between a maximum downlink bandwidth supported by a system and a maximum downlink bandwidth supported by a terminal device; reducing a downlink delay budget of the service from a first downlink delay budget to a second downlink delay budget based on the second downlink transmission bandwidth; and increasing an uplink delay budget of the service from a first uplink delay budget to a second uplink delay budget based on the second downlink delay budget. The method provided in this application helps increase an uplink coverage radius.

401: An access network device increases a downlink transmission bandwidth of a service from a first downlink transmission bandwidth to a second downlink transmission bandwidth, where the second downlink transmission bandwidth is less than or equal to a target downlink transmission bandwidth, and the target downlink transmission bandwidth is a smaller value between a maximum downlink bandwidth supported by a system and a maximum downlink bandwidth supported by a terminal device

402: The access network device reduces a downlink delay budget of the service from a first downlink delay budget to a second downlink delay budget based on the second downlink transmission bandwidth

403: The access network device increases an uplink delay budget of the service from a first uplink delay budget to a second uplink delay budget based on the second downlink delay budget

FIG. 4

Description

TECHNICAL FIELD

This application relates to the field of communication technologies, and in particular, to a transmission parameter adjustment method and a communication apparatus.

BACKGROUND

An augmented reality (augmented reality, AR) technology uses a computer technology to superimpose virtual information into a real world. The virtual information is displayed through devices such as a mobile phone, a tablet computer, and glasses, to be perceived by people. This implements a great integration of reality and virtuality, and enriches the real world. In short, the augmented reality technology gives more information to an object, enhances a three-dimensional sense, and enhances a visual effect and interactive experience.

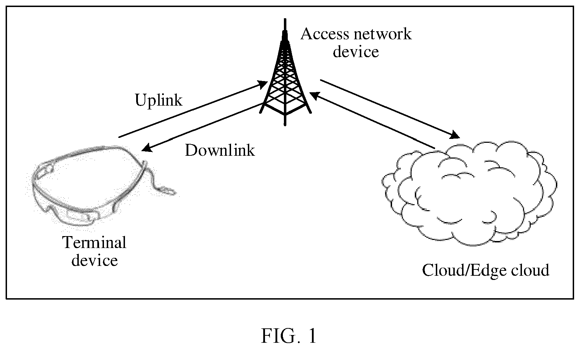

A cloud augmented reality (cloud AR) technology introduces concepts and technologies of cloud computing and cloud rendering into an AR service application. With help of a high-speed and stable network, cloud-based display output and audio output are encoded and compressed and transmitted to a user terminal device. AR service content can be migrated to a cloud and rendered on the cloud, and an AR terminal device can also meet requirements of lightweight and mobility. FIG. 1 is a schematic diagram of an architecture of a cloud AR communication network. An AR terminal device is connected to the network through a base station or another access point, and obtains an AR service from the cloud.

A current mobile communication network design is mainly for a downlink high-bandwidth (enhanced mobile broadband, eMBB) service, for example, a video streaming service. A downlink data rate and coverage performance of a current mobile communication network are far greater than an uplink data rate and coverage performance. For an interactive service, for example, cloud AR, a requirement for uplink data transmission is large. The current network cannot support the service well. Usually, an uplink service rate of the cloud AR is about 1 Mbit/s to 35 Mbit/s, and a downlink service rate is about 30 Mbit/s to 100 Mbit/s. Assuming that the uplink service rate and the downlink service rate of the cloud AR are respectively 5 Mbit/s and 50 Mbit/s, a downlink coverage radius (for example, a coverage radius of the downlink rate 50 Mbit/s is about 500 meters) of the cloud AR is far greater than an uplink coverage radius (for example, a coverage radius of the uplink rate 5 Mbit/s is about 150 meters). The uplink coverage radius is extremely small. This greatly limits a movement range of a cloud AR user. Therefore, how to increase the uplink coverage radius is an urgent problem to be resolved currently.

SUMMARY

This application provides a transmission parameter adjustment method and a communication apparatus to help increase an uplink coverage radius.

According to a first aspect, this application provides a transmission parameter adjustment method. The method includes: increasing a downlink transmission bandwidth of a service from a first downlink transmission bandwidth to a second downlink transmission bandwidth, where the second downlink transmission bandwidth is less than or equal to a target downlink transmission bandwidth, and the target downlink transmission bandwidth is a smaller value between a maximum downlink bandwidth supported by a system and a maximum downlink bandwidth supported by a terminal device; reducing a downlink delay budget of the service from a first downlink delay budget to a second downlink delay budget based on the second downlink transmission bandwidth; and increasing an uplink delay budget of the service from a first uplink delay budget to a second uplink delay budget based on the second downlink delay budget.

The downlink transmission bandwidth of the service is increased, so that the downlink delay budget of the service can be reduced and the uplink delay budget can be increased. The uplink delay budget is increased, so that a modulation order or a code rate in an uplink modulation and coding scheme (modulation and coding scheme, MCS) can be reduced, to increase reliability of uplink transmission and increase an uplink coverage radius. Alternatively, the uplink delay budget is increased, so that an uplink transmission bandwidth can be reduced, to increase power spectral density of uplink transmission and increase the uplink coverage radius. Alternatively, the uplink delay budget is increased, so that a quantity of retransmissions of uplink transmission can be increased, to increase the reliability of uplink transmission and increase the uplink coverage radius. Therefore, the method described in the first aspect helps increase the uplink coverage radius.

In a possible implementation, a downlink transmit power of the service may be further increased from a first downlink transmit power to a second downlink transmit power based on the first downlink transmission bandwidth and the second downlink transmission bandwidth.

If the downlink transmission bandwidth of the service increases and the downlink transmit power of the service does not change, a transmit power on each resource unit decreases, downlink power spectral density decreases, and a downlink coverage radius decreases. The downlink transmit power of the service is increased from the first downlink transmit power to the second downlink transmit power, to ensure that the downlink coverage radius does not decrease.

In a possible implementation, an uplink transmission MCS of the service may be further adjusted from an MCS 1 to an MCS 2 based on the second uplink delay budget, where a modulation order of the MCS 2 is less than a modulation order of the MCS 1, or a code rate of the MCS 2 is less than a code rate of the MCS 1; and the MCS 2 may be further indicated to the terminal device. After a modulation order or code rate of the uplink transmission MCS is reduced, uplink data transmitted on each resource unit becomes less, and the reliability of uplink transmission is increased, thereby increasing the uplink coverage radius.

In a possible implementation, a specific implementation of adjusting the uplink transmission modulation and coding scheme MCS of the service from the MCS 1 to the MCS 2 based on the second uplink delay budget is: adjusting the uplink transmission MCS of the service from the MCS 1 to the MCS 2 based on the second uplink delay budget and a first parameter, where the first parameter includes one or more of the following parameters: an uplink downlink transport block size (transmission block size, TBS) of the service, an uplink transmission bandwidth of the service, or resource overheads of a reference signal. According to this possible implementation, the uplink transmission MCS of the service can be adjusted more accurately.

In a possible implementation, an uplink transmission bandwidth of the service may be further reduced from a first uplink transmission bandwidth to a second uplink transmission bandwidth based on the second uplink delay budget, an uplink frequency domain resource of the service may be adjusted based on the second uplink transmission bandwidth, and the adjusted uplink frequency domain resource of the service may be indicated to the terminal device. After the uplink transmission bandwidth of the service is reduced, the power spectral density of uplink transmission can be increased, to increase the uplink coverage radius.

In a possible implementation, a specific implementation of reducing the uplink transmission bandwidth of the service from the first uplink transmission bandwidth to the second uplink transmission bandwidth based on the second uplink delay budget is: reducing the uplink transmission bandwidth of the service from the first uplink transmission bandwidth to the second uplink transmission bandwidth based on the second uplink delay budget and a second parameter, where the second parameter includes one or more of the following parameters: an uplink TBS of the service, an uplink transmission MCS of the service, or resource overheads of a reference signal. According to this possible implementation, the uplink transmission bandwidth of the service can be adjusted more accurately.

In a possible implementation, a quantity of uplink retransmissions of the service may be increased from a first quantity of uplink retransmissions to a second quantity of uplink retransmissions based on the second uplink delay budget; and the second quantity of uplink retransmissions may be indicated to the terminal device. After the quantity of uplink retransmissions of the service is increased, the reliability of uplink transmission can be increased, to increase the uplink coverage radius.

In a possible implementation, a specific implementation of reducing the downlink delay budget of the service from the first downlink delay budget to the second downlink delay budget based on the second downlink transmission bandwidth is: reducing the downlink delay budget of the service from the first downlink delay budget to the second downlink delay budget based on the second downlink transmission bandwidth and a third parameter, where the third parameter includes one or more of the following parameters: a downlink transport block size TBS of the service, a downlink transmission MCS of the service, or a resource of the reference signal. According to this possible implementation, the downlink delay budget of the service can be adjusted more accurately.

In a possible implementation, a specific implementation of increasing the uplink delay budget of the service from the first uplink delay budget to the second uplink delay budget based on the second downlink delay budget is: $T2_U = T1_D + T1_U - T2_D$, where $T2_U$ is the second uplink delay budget, $T1_U$ is the first uplink delay budget, $T1_D$ is the first downlink delay budget, and $T2_D$ is the second downlink delay budget. According to this possible implementation, the uplink delay budget of the service can be adjusted more accurately.

In a possible implementation, a downlink frequency domain resource of the service may be further adjusted based on the second downlink transmission bandwidth, a downlink time domain resource of the service may be adjusted based on the second downlink delay budget, an uplink time domain resource of the service may be adjusted based on the second uplink delay budget, the adjusted downlink frequency domain resource of the service and the adjusted downlink time domain resource of the service may be indicated to the terminal device, and the adjusted uplink time domain resource of the service may be indicated to the terminal device. According to this possible implementation, a time-frequency resource of the service can be adjusted more accurately.

According to a second aspect, this application provides a transmission parameter adjustment method. The method includes: increasing an uplink transmission bandwidth of a service from a first uplink transmission bandwidth to a second uplink transmission bandwidth, where the second uplink transmission bandwidth is less than or equal to a target uplink transmission bandwidth, and the target uplink transmission bandwidth is a smaller value between a maximum uplink bandwidth supported by a system and a maximum uplink bandwidth supported by a terminal device; reducing an uplink delay budget of the service from a first uplink delay budget to a second uplink delay budget based on the second uplink transmission bandwidth; and increasing a downlink delay budget of the service from a first downlink delay budget to a second downlink delay budget based on the second uplink delay budget.

The uplink transmission bandwidth of the service is increased, so that the uplink delay budget of the service can be reduced and the downlink delay budget can be increased. The downlink delay budget is increased, so that a modulation order or a code rate of a downlink MCS can be reduced, to increase reliability of downlink transmission and increase a downlink coverage radius. Alternatively, the downlink delay budget is increased, so that a downlink transmission bandwidth can be reduced, to increase power spectral density of downlink transmission and increase the downlink coverage radius. Alternatively, the downlink delay budget is increased, so that a quantity of retransmissions of downlink transmission can be increased, to increase the reliability of downlink transmission and increase the downlink coverage radius.

Therefore, the method described in the second aspect helps increase the downlink coverage radius.

In a possible implementation, an uplink transmit power of the service may be further increased from a first uplink transmit power to a second uplink transmit power based on the first uplink transmission bandwidth and the second uplink transmission bandwidth, and the second uplink transmit power may be indicated to the terminal device.

If the uplink transmission bandwidth of the service increases and the uplink transmit power of the service does not change, a transmit power on each resource unit decreases, uplink power spectral density decreases, and an uplink coverage radius decreases. The uplink transmit power of the service is increased from the first uplink transmit power to the second uplink transmit power, to ensure that the uplink coverage radius does not decrease.

In a possible implementation, a downlink transmission MCS of the service may be further adjusted from an MCS 1 to an MCS 2 based on the second downlink delay budget, where a modulation order of the MCS 2 is less than a modulation order of the MCS 1, or a code rate of the MCS 2 is less than a code rate of the MCS 1; and the MCS 2 may be further indicated to the terminal device. After a modulation order or code rate of the downlink transmission MCS is reduced, downlink data transmitted on each resource unit becomes less, and the reliability of downlink transmission is increased, thereby increasing the downlink coverage radius.

In a possible implementation, a specific implementation of adjusting the downlink transmission MCS of the service from the MCS 1 to the MCS 2 based on the second downlink delay budget is: adjusting the downlink transmission MCS of the service from the MCS 1 to the MCS 2 based on the second downlink delay budget and a first parameter, where the first parameter includes one or more of the following parameters: a downlink transport block size TBS of the service, a downlink transmission bandwidth of the service, or resource overheads of a reference signal. According to this possible implementation, the downlink transmission MCS of the service can be adjusted more accurately.

In a possible implementation, a downlink transmission bandwidth of the service may be further reduced from a first downlink transmission bandwidth to a second downlink transmission bandwidth based on the second downlink delay budget, a downlink frequency domain resource of the service may be adjusted based on the second downlink transmission bandwidth, and the adjusted downlink frequency domain resource of the service may be indicated to the terminal device. After the downlink transmission bandwidth of the service is reduced, the power spectral density of downlink transmission can be increased, to increase the downlink coverage radius.

In a possible implementation, a specific implementation of reducing the downlink transmission bandwidth of the service from the first downlink transmission bandwidth to the second downlink transmission bandwidth based on the second downlink delay budget is: reducing the downlink transmission bandwidth of the service from the first downlink transmission bandwidth to the second downlink transmission bandwidth based on the second downlink delay budget and a second parameter, where the second parameter includes one or more of the following parameters: a downlink TBS of the service, a downlink transmission MCS of the service, or resource overheads of a reference signal. According to this possible implementation, the downlink transmission bandwidth of the service can be adjusted more accurately.

In a possible implementation, a quantity of downlink retransmissions of the service may be further increased from a first quantity of downlink retransmissions to a second quantity of downlink retransmissions based on the second downlink delay budget. After the quantity of downlink retransmissions of the service is increased, the reliability of downlink transmission can be increased, to increase the downlink coverage radius.

In a possible implementation, a specific implementation of reducing the uplink delay budget of the service from the first uplink delay budget to the second uplink delay budget based on the second uplink transmission bandwidth is: reducing the uplink delay budget of the service from the first uplink delay budget to the second uplink delay budget based on the second uplink transmission bandwidth and a third parameter, where the third parameter includes one or more of the following parameters: an uplink transport block size TBS of the service, an uplink transmission MCS of the service, or a resource of the reference signal. According to this possible implementation, the uplink delay budget of the service can be adjusted more accurately.

In a possible implementation, a specific implementation of increasing the downlink delay budget of the service from the first downlink delay budget to the second downlink delay budget based on the second uplink delay budget is: $T2_D = T1_U + T1_D - T2_U$, where $T2_D$ is the second downlink delay budget, $T1_D$ is the first downlink delay budget, $T1_U$ is the first uplink delay budget, and $T2_U$ is the second uplink delay budget. According to this possible implementation, the downlink delay budget of the service can be adjusted more accurately.

In a possible implementation, an uplink frequency domain resource of the service may be further adjusted based on the second uplink transmission bandwidth, an uplink time domain resource of the service may be adjusted based on the second uplink delay budget, a downlink time domain resource of the service may be adjusted based on the second downlink delay budget, the adjusted uplink frequency domain resource of the service and the adjusted uplink time domain resource of the service may be indicated to the terminal device, and the adjusted downlink time domain resource of the service may be indicated to the terminal device. According to this possible implementation, a time-frequency resource of the service can be adjusted more accurately.

According to a third aspect, this application provides a communication apparatus. The apparatus may be an access network device, an apparatus in the access network device, or an apparatus that can coordinate with the access network device. The communication apparatus may alternatively be a chip system. The communication apparatus may perform the method according to the first aspect or the second aspect. A function of the communication apparatus may be implemented by hardware, or may be implemented by hardware by executing corresponding software. The hardware or the software includes one or more units or modules corresponding to the foregoing function. The unit or the module may be software and/or hardware. For operations performed by the communication apparatus and beneficial effects thereof, refer to the method in the first aspect or the second aspect, and the beneficial effects thereof. Repeated content is not described again.

According to a fourth aspect, this application provides a communication apparatus. The communication apparatus includes a processor. When the processor invokes a computer program in a memory, the method according to any one of the first aspect and the second aspect is performed.

According to a fifth aspect, this application provides a communication apparatus. The communication apparatus includes a processor and a memory, and the processor and the memory are coupled. The processor is configured to implement the method according to any one of the first aspect and the second aspect.

According to a sixth aspect, this application provides a communication apparatus. The communication apparatus includes a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method according to any one of the first aspect and the second aspect by using a logic circuit or by executing code instructions.

According to a seventh aspect, this application provides a computer-readable storage medium. The storage medium stores a computer program or instructions, and when the computer program or the instructions are executed by a communication apparatus, the method according to any one of the first aspect and the second aspect is implemented.

According to an eighth aspect, this application provides a computer program product including instructions. When a computer reads and executes the computer program product, the computer is enabled to perform the method according to any one of the first aspect and the second aspect.

**BRIEF DESCRIPTION OF DRAWINGS**

FIG. 1 is a schematic diagram of an architecture of a current cloud AR communication network;
FIG. 2 is a schematic diagram of current cloud AR cloud rendering streaming;
FIG. 3 is a schematic diagram of a communication system according to an embodiment of this application;
FIG. 4 is a schematic flowchart of a transmission parameter adjustment method according to an embodiment of this application;
FIG. 5 is a schematic diagram of transmission parameter adjustment according to an embodiment of this application;
FIG. 6 is a schematic diagram of transmission parameter adjustment according to an embodiment of this application;
FIG. 7 is a schematic flowchart of a transmission parameter adjustment method according to an embodiment of this application;
FIG. 8 is a schematic diagram of transmission parameter adjustment according to an embodiment of this application;
FIG. 9 is a schematic flowchart of a transmission parameter adjustment method according to an embodiment of this application;
FIG. 10 is a schematic diagram of transmission parameter adjustment according to an embodiment of this application;
FIG. 11 is a schematic flowchart of a transmission parameter adjustment method according to an embodiment of this application;
FIG. 12 is a schematic diagram of transmission parameter adjustment according to an embodiment of this application;
FIG. 13 is a schematic flowchart of a transmission parameter adjustment method according to an embodiment of this application;

FIG. 14 is a schematic flowchart of a transmission parameter adjustment method according to an embodiment of this application;

FIG. 15 is a schematic flowchart of a transmission parameter adjustment method according to an embodiment of this application;

FIG. 16 is a schematic flowchart of a transmission parameter adjustment method according to an embodiment of this application;

FIG. 17 is a schematic diagram of a structure of a communication apparatus according to an embodiment of this application; and

FIG. 18 is a schematic diagram of a structure of a communication apparatus according to an embodiment of this application.

## DESCRIPTION OF EMBODIMENTS

In the specification, the claims, and the accompanying drawings of this application, the terms "first", "second", and the like are intended to distinguish between different objects but do not indicate a particular order. In addition, the terms "including", "having" or any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a specific feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

To better understand embodiments of this application, the following first describes related concepts in embodiments of this application.

1. Augmented reality (augmented reality, AR): The AR uses a computer technology to superimpose virtual information into a real world. The virtual information is displayed through devices such as a mobile phone, a tablet computer, and glasses, to be perceived by people. This implements a great integration of reality and virtuality, and enriches the real world. In short, the AR gives more information to an object, enhances a three-dimensional sense, and enhances a visual effect and interactive experience.

2. Cloud augmented reality (cloud AR): The cloud augmented reality introduces concepts and technologies of cloud computing and cloud rendering into an AR service application. With help of a high-speed and stable network, cloud-based display output and audio output are encoded and compressed and transmitted to a user terminal device. AR service content can be migrated to a cloud and rendered on the cloud, and an AR terminal device can also meet requirements of lightweight and mobility. FIG. 1 is a schematic diagram of an architecture of a cloud AR communication network. An AR terminal device is connected to a network through a base station or another access point, and obtains an AR service from the cloud.

A change of scene content display of the AR is caused by a change of a gaze focus target and a change (action) of a spatial relationship between a position and a fixation point. AR uplink transmission mainly transmits clear and stable images or video streams, and a data volume is large. Therefore, the cloud AR has a high requirement on an uplink transmission rate. According to research and evaluation in the industry, a network uplink rate required for initial interactive AR service experience is about 2 Mbit/s, and a network rate required for advanced experience is 10 Mbit/s.

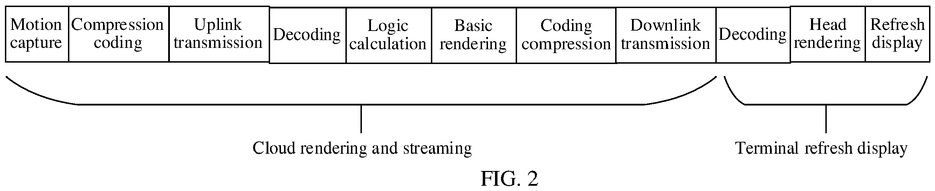

FIG. 2 is a schematic diagram of cloud AR cloud rendering streaming, and mainly includes two processes: cloud rendering and streaming, and terminal refresh display. Usually, to meet quality of experience (quality of experience, QoE) of a user, a delay from motion capture to terminal refresh display (motion-to-photon, MTP) usually does not exceed 20 ms (milliseconds). In other words, a time difference between a movement of a person's head and a change of an image seen by eyes should be limited within 20 ms. Because delays are introduced by compression coding, decoding, a logic technology, rendering, coding compression, and uplink and downlink transmission, if serial processing is performed step by step according to the procedure shown in FIG. 2, it is difficult to implement that the MTP is less than 20 ms. A terminal-cloud asynchronous rendering technology is used, that is, asynchronous timewarp (asynchronous timewarp, ATW) is used, so that a terminal and a cloud can perform parallel processing, and a delay requirement of cloud rendering and streaming can be relaxed to 70 ms. Considering processing delays such as compression coding, decoding, cloud rendering, logic calculation, and compression coding, a total delay budget left for uplink and downlink transmission is usually less than or equal to 20 ms. In other words, a round trip time (round trip time, RTT) requirement of a cloud AR service for network transmission is usually less than or equal to 20 ms. The cloud AR service does not have a special requirement for transmission time in a direction (uplink or downlink) or allocation of uplink and downlink transmission delays.

3. Downlink delay budget: Downlink transmission needs to be completed within the downlink delay budget. Actual time used for downlink transmission may be less than or equal to the downlink delay budget. The downlink transmission is transmission sent by an access network device and received by a terminal device. For example, if the downlink delay budget is 10 ms, the downlink transmission needs to be completed within 10 ms, and the actual time used for the downlink transmission may be less than or equal to 10 ms.

4. Uplink delay budget: Uplink transmission needs to be completed within the uplink delay budget. Actual time used for uplink transmission may be less than or equal to the uplink delay budget. The uplink transmission is transmission sent by a terminal device and received by an access network device. For example, if the uplink delay budget is 10 ms, the uplink transmission needs to be completed within 10 ms, and the actual time used for the uplink transmission may be less than or equal to 10 ms.

To better understand embodiments of this application, the following first uses an example to describe a system architecture to which embodiments of this application are applicable.

The method provided in this application may be applied to various communication systems, for example, an internet of things (internet of things, IoT) system, a narrow band internet of things (narrow band internet of things, NB-IoT) system, a long term evolution (long term evolution, LTE) system, a 5th-generation (5th-generation, 5G) communication system, an LTE and 5G hybrid architecture, a 5G new radio (new radio, NR) system, a new communication system emerging in future communication development, or the like.

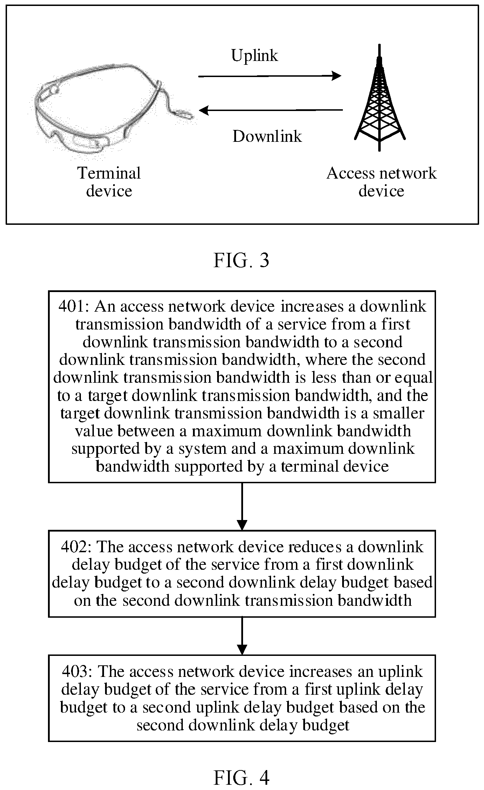

FIG. 3 is a schematic diagram of a communication system according to an embodiment of this application. A solution in this application is applicable to the communication system. The communication system may include at least one access network device and at least one terminal device. FIG. 3 uses a communication system that includes one access network device and one terminal device as an example.

The access network device in embodiments of this application is an entity for transmitting or receiving a signal on a network side, may be configured to perform mutual conversion between a received over-the-air frame and an internet protocol (internet protocol, IP) packet, and serves as a router between the terminal device and a remaining part of an access network. The remaining part of the access network may include an IP network or the like. The access network device may further coordinate management on an attribute of an air interface. For example, the access network device may be an evolved NodeB (evolved NodeB, eNB or eNodeB) in LTE, a new radio controller (new radio controller, NR controller), a gNodeB (gNB) in a 5G system, a centralized network element (centralized unit), a new radio base station, a remote radio module, a micro base station, a relay (relay), a distributed network element (distributed unit), a reception point (transmission reception point, TRP), a transmission point (transmission point, TP), or any other radio access device. However, embodiments of this application are not limited thereto.

The terminal device in embodiments of this application is an entity that is on a user side and that is configured to receive or transmit a signal. The terminal device may be a device that provides a user with voice and/or data connectivity, for example, a handheld device or a vehicle-mounted device having a wireless connection function. The terminal device may alternatively be another processing device connected to a wireless modem. The terminal device may communicate with a radio access network (radio access network, RAN). The terminal device may also be referred to as a wireless terminal, a subscriber unit (subscriber unit), a subscriber station (subscriber station), a mobile station (mobile station), a mobile (mobile) console, a remote station (remote station), an access point (access point), a remote terminal (remote terminal), an access terminal (access terminal), a user terminal (user terminal), a user agent (user agent), a user device (user device), user equipment (user equipment, UE), or the like. Alternatively, the terminal device may be referred to as a user for short. The terminal device may be a mobile terminal, for example, a mobile phone (or referred to as a "cellular" phone), and a computer that has a mobile terminal. For example, the terminal device may be a portable, pocket-sized, handheld, computer built-in, or a vehicle-mounted mobile apparatus, which exchanges a voice and/or data with the radio access network. For example, the terminal device may alternatively be a device, for example, a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). A common terminal device includes, for example, a mobile phone, a tablet computer, a notebook computer, a palmtop computer, a mobile internet device (mobile internet device, MID), and a wearable device such as smart glasses, a smart watch, a smart band, or a pedometer. However, this is not limited in embodiments of this application.

The following describes in detail a transmission parameter adjustment method provided in embodiments of this application.

FIG. 4 is a schematic flowchart of a transmission parameter adjustment method according to an embodiment of this application. As shown in FIG. 4, the transmission parameter adjustment method includes the following step 401 to step 403. The method shown in FIG. 4 may be performed by an access network device, or may be performed by a chip in the access network device. In FIG. 4, an example in which the method is performed by the access network device is used for description. Execution bodies of transmission parameter adjustment methods shown in other accompanying drawings in embodiment of this application are similar to the foregoing descriptions, and details are not described below again.

401: The access network device increases a downlink transmission bandwidth of a service from a first downlink transmission bandwidth to a second downlink transmission bandwidth, where the second downlink transmission bandwidth is less than or equal to a target downlink transmission bandwidth, and the target downlink transmission bandwidth is a smaller value between a maximum downlink bandwidth supported by a system and a maximum downlink bandwidth supported by a terminal device.

The service may be a service with a large uplink data volume, for example, cloud AR, a voice upload service, an image upload service, or a video upload service.

It is assumed that $B_{DS}^{Max}$ is the maximum downlink bandwidth supported by the system, and $B_{DUE}^{Max}$ is the maximum downlink bandwidth supported by the terminal device. The first downlink transmission bandwidth is $B1_D$. The target downlink transmission bandwidth is $min\{B_{DS}^{Max}, B_{DUE}^{Max}\}$. The access network device may first determine an increasing factor β. β is less than or equal to $min\{B_{DS}^{Max}, B_{DUE}^{Max}\}/B1_D$ and greater than 1. After determining the increasing factor β, the access network device increases the downlink transmission bandwidth of the service from the first downlink transmission bandwidth to the second downlink transmission bandwidth based on the increasing factor β, that is, the second downlink transmission bandwidth is $\beta B1_D$. A protocol may pre-specify that β is a specific value that is less than or equal to $min\{B_{DS}^{Max}, B_{DUE}^{Max}\}/B1_D$ and greater than 1. Alternatively, the access network device may select, according to a preset rule, a value that is less than or equal to $min\{B_{DS}^{Max}, B_{DUE}^{Max}\}/B1_D$ and greater than 1, as β.

Alternatively, the access network device may not determine the increasing factor β. For example, the protocol may directly specify that the second downlink transmission bandwidth is a specific value that is less than or equal to $min\{B_{DS}^{Max}, B_{DUE}^{Max}\}$ and greater than the first downlink transmission bandwidth. Alternatively, the access network device may directly select, according to a preset rule, a value from values that are less than or equal to $min\{B_{DS}^{Max}, B_{DUE}^{Max}\}$ and greater than the first downlink transmission bandwidth, as the second downlink transmission bandwidth.

In a possible implementation, the access network device may further increase a downlink transmit power of the service from a first downlink transmit power to a second downlink transmit power based on the first downlink transmission bandwidth and the second downlink transmission bandwidth. For example, it is assumed that the second downlink transmit power is $P2_D$, the first downlink transmit power is $P1_D$, the first downlink transmission bandwidth is $B1_D$, the second downlink transmission bandwidth is $B2_D$, and

$$P2_D = P1_D \times \frac{B2_D}{B1_D}$$

. Alternatively, the access network device increases the downlink transmit power of the service from the first downlink transmit power to the second downlink transmit power based on the increasing factor β. For example, $P2_D = P1_D \times \beta$.

If the downlink transmission bandwidth of the service increases and the downlink transmit power of the service does not change, a transmit power on each resource unit decreases, downlink power spectral density decreases, and a downlink coverage radius decreases. The downlink transmit power of the service is increased from the first downlink transmit power to the second downlink transmit power, to ensure that the downlink coverage radius does not decrease.

402: The access network device reduces a downlink delay budget of the service from a first downlink delay budget to a second downlink delay budget based on the second downlink transmission bandwidth.

In this embodiment of this application, a downlink transmission modulation and coding scheme (modulation and coding scheme, MCS) of the service and a downlink transport block size (transmission block size, TBS) of the service do not change. When the downlink transmission MCS of the service and the downlink TBS of the service do not change, if the downlink transmission bandwidth is increased, the downlink delay budget of the service decreases.

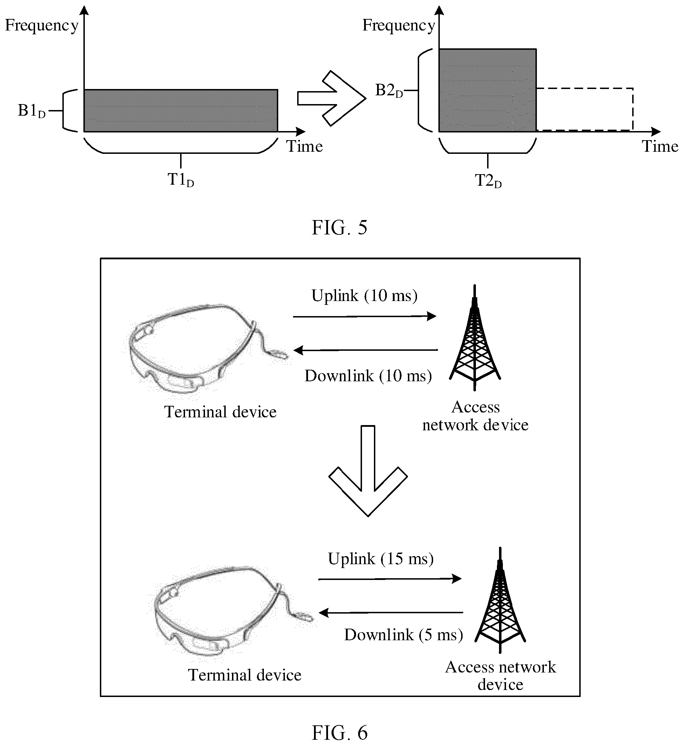

For example, as shown in FIG. 5, it is assumed that the first downlink transmission bandwidth of the service is $B1_D$, and the first downlink delay budget is $T1_D$. When the downlink transmission MCS of the service and the downlink TBS of the service do not change, after the access network device increases the downlink transmission bandwidth of the service to $B2_D$, the downlink delay budget of the service is reduced to $T2_D$.

In a possible implementation, a specific implementation in which the access network device reduces the downlink delay budget of the service from the first downlink delay budget to the second downlink delay budget based on the second downlink transmission bandwidth is that the access network device reduces the downlink delay budget of the service from the first downlink delay budget to the second downlink delay budget based on the second downlink transmission bandwidth and a third parameter, where the third parameter includes one or more of the following parameters: a downlink TBS of the service, a downlink transmission MCS of the service, or a resource of the reference signal. The reference signal may include but is not limited to a demodulation reference signal (demodulation reference signal, DMRS), a channel status information reference signal (channel status information reference signal, CSI-RS), or the like. According to this possible implementation, the downlink delay budget of the service can be adjusted more accurately.

For example, when the downlink TBS of the service and the downlink transmission MCS of the service do not change, if resource overheads of the reference signal do not change before and after adjustment, the second downlink delay budget is $T2_D = T1_D \times B1_D/B2_D$.

In another possible implementation, the access network device may determine a reduction factor $\alpha$ based on the first downlink transmission bandwidth and the second downlink transmission bandwidth, or the access network device may determine the reduction factor $\alpha$ based on the increasing factor $\beta$. Then, the downlink delay budget of the service is reduced from the first downlink delay budget $T1_D$ to the second downlink delay budget $T2_D$ based on the reduction factor $\alpha$, for example, the second downlink delay budget $T2_D = T1_D \times \alpha$, where $0<\alpha<1$. According to this possible implementation, the downlink delay budget of the service can be adjusted accurately.

A specific implementation in which the access network device determines the reduction factor $\alpha$ based on the first downlink transmission bandwidth and the second downlink transmission bandwidth may be that the access network device determines the reduction factor $\alpha$ based on the first downlink transmission bandwidth, the second downlink transmission bandwidth, and the resource of the reference signal. According to this possible implementation, the downlink delay budget of the service can be adjusted more accurately. For example, it is assumed that the first downlink transmission bandwidth is 100 MHz, the second downlink transmission bandwidth is 120 MHz, the resource overheads of the reference signal do not change before and after adjustment, the reduction factor $\alpha=5/6$, and the reduction factor $\alpha$ is a ratio of the first downlink transmission bandwidth to the second downlink transmission bandwidth.

A specific implementation in which the access network device determines the reduction factor $\alpha$ based on the increasing factor $\beta$ may be that the access network device determines the reduction factor $\alpha$ based on the increasing factor $\beta$ and the resource of the reference signal. According to this possible implementation, the downlink delay budget of the service can be adjusted more accurately. For example, it is assumed that the increasing factor $\beta$ is 1.2, the resource overheads of the reference signal do not change before and after the adjustment, and the reduction factor $\alpha=1/\beta=5/6$.

403: The access network device increases an uplink delay budget of the service from a first uplink delay budget to a second uplink delay budget based on the second downlink delay budget.

In this embodiment of this application, a sum of the uplink delay budget of the service and the downlink delay budget of the service does not change. When the sum of the uplink delay budget of the service and the downlink delay budget of the service does not change, the downlink delay budget of the service decreases, and the uplink delay budget of the service can increase. Therefore, the access network device may increase the uplink delay budget of the service from the first uplink delay budget to the second uplink delay budget based on the second downlink delay budget. For example, $T2_U = T1_D + T1_U - T2_D$, where $T2_U$ is the second uplink delay budget, $T1_U$ is the first uplink delay budget, $T1_D$ is the first downlink delay budget, and $T2_D$ is the second downlink delay budget.

For example, as shown in FIG. 6, it is assumed that both the first uplink delay budget and the first downlink delay budget are 10 ms. If the second downlink delay budget is 5 ms, the second uplink delay budget is 15 ms, that is, the downlink delay budget of the service is reduced to 5 ms, and the uplink delay budget of the service is increased to 15 ms.

In the method described in FIG. 4, the downlink transmission bandwidth of the service is increased, so that the downlink delay budget of the service can be reduced and the uplink delay budget can be increased. The uplink delay budget is increased, so that a modulation order or a code rate of an uplink MCS can be reduced, to increase reliability of uplink transmission and increase an uplink coverage radius. Alternatively, the uplink delay budget is increased, so that an uplink transmission bandwidth can be reduced, to increase power spectral density of uplink transmission and increase the uplink coverage radius. Alternatively, the uplink delay budget is increased, so that a quantity of retransmissions of uplink transmission can be increased, to increase the reliability of uplink transmission and increase the uplink coverage radius. Therefore, the method described in FIG. 4 helps increase the uplink coverage radius.

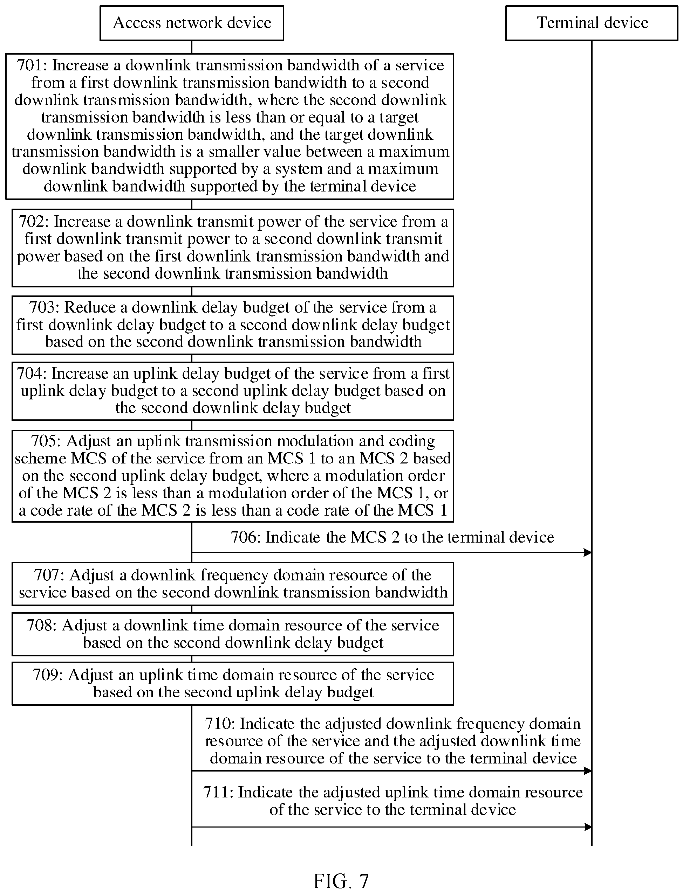

FIG. 7 is a schematic flowchart of another transmission parameter adjustment method according to an embodiment of this application. As shown in FIG. 7, the transmission parameter adjustment method includes the following step 701 to step 711.

701: An access network device increases a downlink transmission bandwidth of a service from a first downlink transmission bandwidth to a second downlink transmission bandwidth, where the second downlink transmission bandwidth is less than or equal to a target downlink transmission bandwidth, and the target downlink transmission bandwidth is a smaller value between a maximum downlink bandwidth supported by a system and a maximum downlink bandwidth supported by a terminal device.

702: The access network device increases a downlink transmit power of the service from a first downlink transmit power to a second downlink transmit power based on the first downlink transmission bandwidth and the second downlink transmission bandwidth.

703: The access network device reduces a downlink delay budget of the service from a first downlink delay budget to a second downlink delay budget based on the second downlink transmission bandwidth.

704: The access network device increases an uplink delay budget of the service from a first uplink delay budget to a second uplink delay budget based on the second downlink delay budget.

For a specific implementation of step 701 to step 704, refer to the descriptions in the embodiment corresponding to FIG. 4. Details are not described herein again.

705: The access network device adjusts an uplink transmission MCS of the service from an MCS 1 to an MCS 2 based on the second uplink delay budget, where a modulation order of the MCS 2 is less than a modulation order of the MCS 1, or a code rate of the MCS 2 is less than a code rate of the MCS 1.

In this embodiment of this application, an uplink transmission bandwidth of the service and an uplink TBS of the service do not change. When the uplink transmission bandwidth of the service and the uplink TBS of the service do not change, if the uplink delay budget of the service increases, a modulation order or code rate of the uplink transmission MCS may be reduced. After the modulation order or code rate of the uplink transmission MCS is reduced, uplink data transmitted on each resource unit becomes less, and reliability of uplink transmission is increased, thereby increasing an uplink coverage radius.

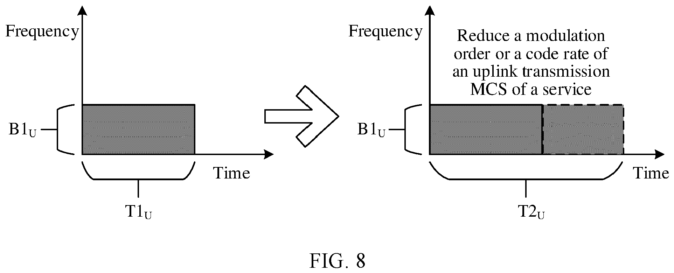

For example, as shown in FIG. 8, it is assumed that a first uplink transmission bandwidth of the service is $B1_U$, and the first uplink delay budget is $T1_U$. The uplink transmission bandwidth and the uplink TBS of the service do not change. After increasing the uplink delay budget of the service to $T2_U$, the access network device needs to reduce the modulation order or code rate of the uplink transmission MCS.

In a possible implementation, a specific implementation in which the access network device adjusts the uplink transmission modulation and coding scheme MCS of the service from the MCS 1 to the MCS 2 based on the second uplink delay budget is that the access network device adjusts the uplink transmission MCS of the service from the MCS 1 to the MCS 2 based on the second uplink delay budget and a first parameter, where the first parameter includes one or more of the following parameters: the uplink TBS of the service, the uplink transmission bandwidth of the service, or resource overheads of a reference signal. The reference signal may include but is not limited to a demodulation reference signal (demodulation reference signal, DMRS), a channel status information reference signal (channel status information reference signal, CSI-RS), or the like. According to this possible implementation, the uplink transmission MCS of the service can be adjusted more accurately.

For example, when the uplink TBS of the service and the uplink transmission bandwidth of the service do not change, if the resource overheads of the reference signal do not change before and after adjustment, a ratio of spectral efficiency corresponding to the MCS 2 to spectral efficiency corresponding to the MCS 1 should be greater than or equal to $T1_U/T2_U$. The MCS 2 may be selected in a way that the spectral efficiency corresponding to the MCS 2 is greater than or equal to a minimum value of the spectral efficiency corresponding to the MCS 1 $^*T1_U/T2_U$. For example, the first uplink delay budget $T1_U$ before adjustment is 10 ms, and the second uplink delay budget $T2_U$ after adjustment is 15 ms. In Table 1, a first column is an MCS index value, a second column is a modulation order, a third column is a code rate, and a fourth column is spectral efficiency. Spectral efficiency=modulation order*code rate. As shown in Table 1, the uplink transmission modulation and coding scheme MCS 1 before adjustment is 8, and the spectral efficiency corresponding to the MCS 1 is 1.1758. In this case, the spectral efficiency corresponding to the uplink transmission modulation and coding scheme MCS 2 after adjustment should be greater than or equal to 1.1758*10/15=0.7839. It can be found from Table 1 that an MCS corresponding to spectral efficiency that is greater than or equal to 0.7839 should be greater than or equal to 6, and the MCS 2 is a minimum value, that is, 6. A correspondence between the MCS index, the modulation order, the code rate, and the spectral efficiency in Table 1 is merely an example. The correspondence between the MCS index, the modulation order, the code rate, and the spectral efficiency is not limited in this embodiment of this application.

**Table 1**

| MCS index $I_{MCS}$ | Modulation order $Q_m$ | Target code rate $R$ x [1024] | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Reserved (reserved) | |
| 30 | 4 | Reserved (reserved) | |
| 31 | 6 | Reserved (reserved) | |

706: The access network device indicates the MCS 2 to the terminal device.

In this embodiment of this application, the access network device may indicate the MCS 2 to the terminal device through a physical downlink control channel (physical downlink control channel, PDCCH). After determining the MCS 2, the terminal device may subsequently encode uplink data of the service based on the MCS 2.

707: The access network device adjusts a downlink frequency domain resource of the service based on the second downlink transmission bandwidth.

In this embodiment of this application, because the downlink transmission bandwidth of the service is adjusted to the second downlink transmission bandwidth, the downlink frequency domain resource of the service may be adjusted based on the second downlink transmission bandwidth.

708: The access network device adjusts a downlink time domain resource of the service based on the second downlink delay budget.

In this embodiment of this application, because the downlink delay budget of the service is adjusted to the second downlink delay budget, the downlink time domain resource of the service may be adjusted based on the second downlink delay budget.

709: The access network device adjusts an uplink time domain resource of the service based on the second uplink delay budget.

In this embodiment of this application, because the uplink delay budget of the service is adjusted to the second uplink delay budget, the uplink time domain resource of the service may be adjusted based on the second uplink delay budget.

710: The access network device indicates the adjusted downlink frequency domain resource of the service and the adjusted downlink time domain resource of the service to the terminal device.

In this embodiment of this application, the access network device may indicate the adjusted downlink frequency domain resource of the service and the adjusted downlink time domain resource of the service to the terminal device through the PDCCH. After determining the adjusted downlink frequency domain resource of the service and the adjusted downlink time domain resource of the service, the terminal device may receive, on a downlink time-frequency resource of the service, service data sent by the access network device. Alternatively, the access network device may not indicate the adjusted downlink frequency domain resource of the service and the adjusted downlink time domain resource of the service to the terminal device, and the terminal device may blindly detect the service data sent by the access network device.

711: The access network device indicates the adjusted uplink time domain resource of the service to the terminal device.

In this embodiment of this application, the access network device may indicate the adjusted uplink time domain resource of the service to the terminal device through the PDCCH. After determining the adjusted uplink time domain resource of the service, the terminal device may send the service data to the access network device on the uplink time domain resource of the service.

Optionally, the access network device may indicate the MCS 2, the adjusted downlink time-frequency resource of the service, and the adjusted uplink time domain resource of the service to the terminal device through a same message. Alternatively, the access network device may indicate the MCS 2, the adjusted downlink time-frequency resource of the service, and the adjusted uplink time domain resource of the service to the terminal device through different messages.

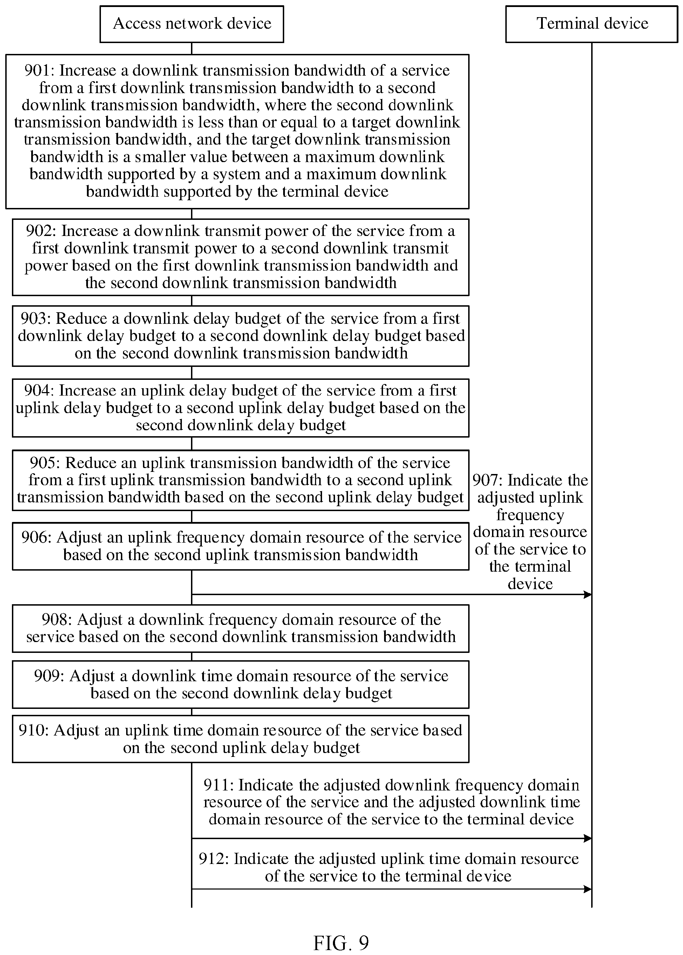

FIG. 9 is a schematic flowchart of another transmission parameter adjustment method according to an embodiment of this application. As shown in FIG. 9, the transmission parameter adjustment method includes the following step 901 to step 912.

901: An access network device increases a downlink transmission bandwidth of a service from a first downlink transmission bandwidth to a second downlink transmission bandwidth, where the second downlink transmission bandwidth is less than or equal to a target downlink transmission bandwidth, and the target downlink transmission bandwidth is a smaller value between a maximum downlink bandwidth supported by a system and a maximum downlink bandwidth supported by a terminal device.

902: The access network device increases a downlink transmit power of the service from a first downlink transmit power to a second downlink transmit power based on the first downlink transmission bandwidth and the second downlink transmission bandwidth.

903: The access network device reduces a downlink delay budget of the service from a first downlink delay budget to a second downlink delay budget based on the second downlink transmission bandwidth.

904: The access network device increases an uplink delay budget of the service from a first uplink delay budget to a second uplink delay budget based on the second downlink delay budget.

For a specific implementation of step 901 to step 904, refer to the descriptions in the embodiment corresponding to FIG. 4. Details are not described herein again.

905. The access network device reduces an uplink transmission bandwidth of the service from a first uplink transmission bandwidth to a second uplink transmission bandwidth based on the second uplink delay budget.

In this embodiment of this application, an uplink transmission MCS of the service and an uplink TBS of the service do not change. When the uplink transmission MCS of the service and the uplink TBS of the service do not change, if the uplink delay budget of the service increases, the uplink transmission bandwidth of the service may be reduced. After the uplink transmission bandwidth of the service is reduced, power spectral density of uplink transmission can be increased, to increase an uplink coverage radius.

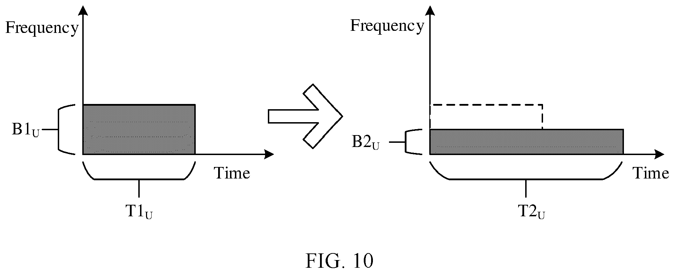

For example, as shown in FIG. 10, it is assumed that the first uplink transmission bandwidth of the service is $B1_U$, and the first uplink delay budget is $T1_U$. The uplink transmission MCS and the uplink TBS of the service do not change. After increasing the uplink delay budget of the service to $T2_U$, the access network device needs to reduce the uplink transmission bandwidth to $B2_U$.

In a possible implementation, a specific implementation in which the access network device reduces the uplink transmission bandwidth of the service from the first uplink transmission bandwidth to the second uplink transmission bandwidth based on the second uplink delay budget is that the access network device reduces the uplink transmission bandwidth of the service from the first uplink transmission bandwidth to the second uplink transmission bandwidth based on the second uplink delay budget and a second parameter, where the second parameter includes one or more of the following parameters: an uplink transport block size TBS of the service, the uplink transmission MCS of the service, or resource overheads of a reference signal. The reference signal may include but is not limited to a demodulation reference signal (demodulation reference signal, DMRS), a channel status information reference signal (channel status information reference signal, CSI-RS), or the like. According to this possible implementation, the uplink transmission bandwidth of the service can be adjusted more accurately.

For example, when the uplink TBS of the service and the uplink transmission MCS of the service do not change, if the resource overheads of the reference signal do not change before and after adjustment, the adjusted uplink transmission bandwidth of the service is $B2_U = B1_U * T1_U / T2_U$.

906: The access network device adjusts an uplink frequency domain resource of the service based on the second uplink transmission bandwidth.

In this embodiment of this application, after reducing the uplink transmission bandwidth of the service from the first uplink transmission bandwidth to the second uplink transmission bandwidth, the access network device adjusts the uplink frequency domain resource of the service based on the second uplink transmission bandwidth.

907: The access network device indicates the adjusted uplink frequency domain resource of the service to the terminal device.

In this embodiment of this application, after adjusting the uplink frequency domain resource of the service based on the second uplink transmission bandwidth, the access network device indicates the adjusted uplink frequency domain resource of the service to the terminal device. The access network device may indicate the adjusted uplink frequency domain resource of the service to the terminal device through a PDCCH.

908: The access network device adjusts a downlink frequency domain resource of the service based on the second downlink transmission bandwidth.

909: The access network device adjusts a downlink time domain resource of the service based on the second downlink delay budget.

910: The access network device adjusts an uplink time domain resource of the service based on the second uplink delay budget.

911: The access network device indicates the adjusted downlink frequency domain resource of the service and the adjusted downlink time domain resource of the service to the terminal device.

912: The access network device indicates the adjusted uplink time domain resource of the service to the terminal device.

For a specific implementation of step 908 to step 912, refer to the descriptions in the embodiment corresponding to FIG. 7. Details are not described herein again.

Optionally, the access network device may indicate the adjusted downlink frequency domain resource of the service, an adjusted downlink time-frequency resource of the service, and the adjusted uplink frequency domain resource of the service to the terminal device through a same message. Alternatively, the access network device may indicate the adjusted downlink frequency domain resource of the service, the adjusted downlink time-frequency resource of the service, and the adjusted uplink frequency domain resource of the service to the terminal device through different messages.

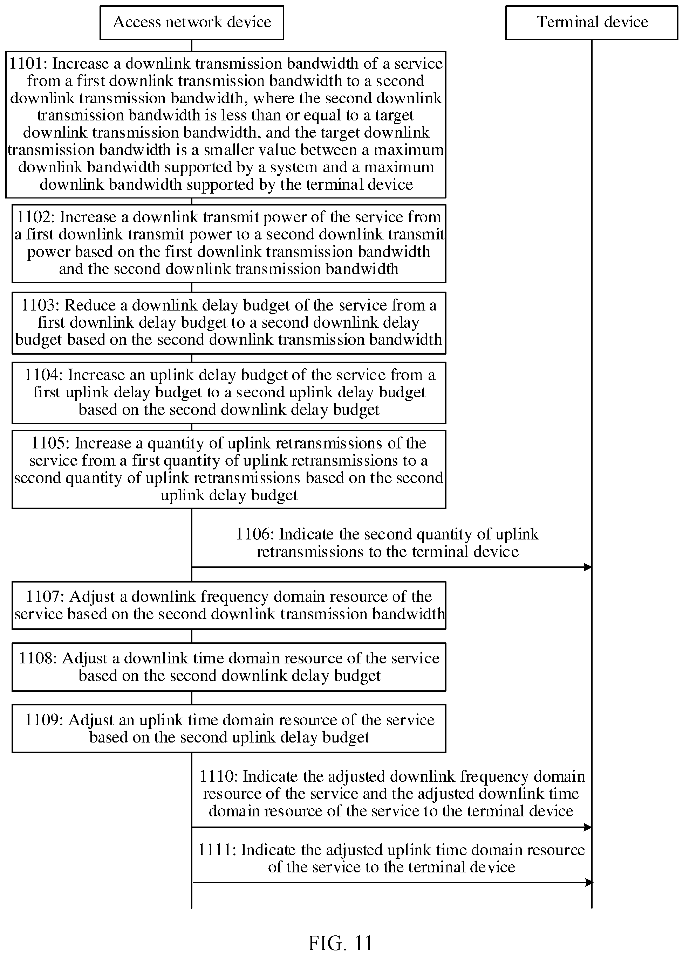

FIG. 11 is a schematic flowchart of another transmission parameter adjustment method according to an embodiment of this application. As shown in FIG. 11, the transmission parameter adjustment method includes the following step 1101 to step 1111.

1101: An access network device increases a downlink transmission bandwidth of a service from a first downlink transmission bandwidth to a second downlink transmission bandwidth, where the second downlink transmission bandwidth is less than or equal to a target downlink transmission bandwidth, and the target downlink transmission bandwidth is a smaller value between a maximum downlink bandwidth supported by a system and a maximum downlink bandwidth supported by a terminal device.

1102: The access network device increases a downlink transmit power of the service from a first downlink transmit power to a second downlink transmit power based on the first downlink transmission bandwidth and the second downlink transmission bandwidth.

1103: The access network device reduces a downlink delay budget of the service from a first downlink delay budget to a second downlink delay budget based on the second downlink transmission bandwidth.

1104: The access network device increases an uplink delay budget of the service from a first uplink delay budget to a second uplink delay budget based on the second downlink delay budget.

For a specific implementation of step 1101 to step 1104, refer to the descriptions in the embodiment corresponding to FIG. 4. Details are not described herein again.

1105: The access network device increases a quantity of uplink retransmissions of the service from a first quantity of uplink retransmissions to a second quantity of uplink retransmissions based on the second uplink delay budget.

In this embodiment of this application, an uplink transmission MCS of the service, an uplink transmission bandwidth of the service, and an uplink TBS of the service do not change. When the uplink transmission MCS of the service, the uplink transmission bandwidth of the service, and the uplink TBS of the service do not change, if the uplink delay budget of the service increases, the quantity of uplink retransmissions of the service may be increased. After the quantity of uplink retransmissions of the service is increased, reliability of uplink transmission can be increased, to increase an uplink coverage radius. The quantity of uplink retransmissions is a quantity of times that the terminal device repeatedly sends same data. The terminal device may perform uplink retransmission only when uplink transmission fails. Alternatively, the terminal device may perform uplink retransmission when uplink transmission does not fail.

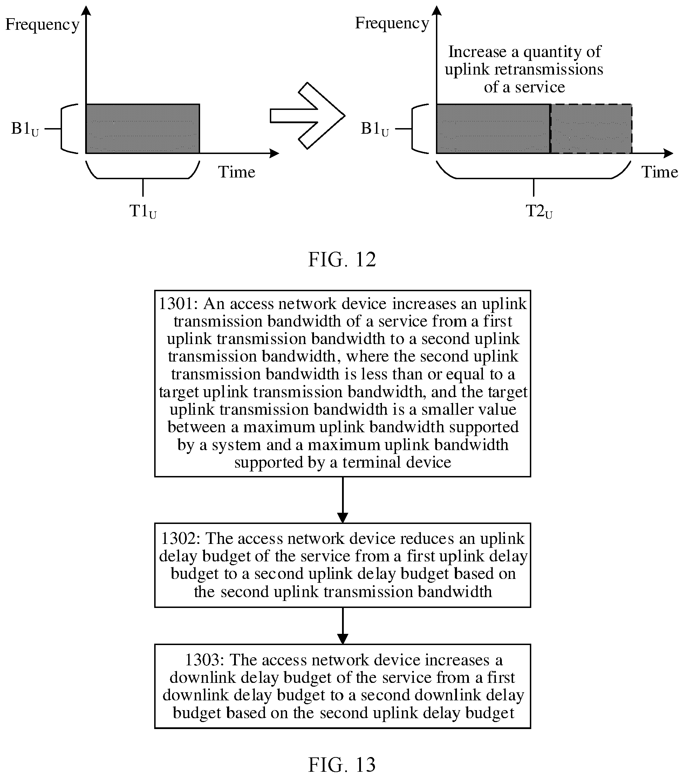

For example, as shown in FIG. 12, it is assumed that a first uplink transmission bandwidth of the service is $B1_U$, and the first uplink delay budget is $T1_U$. The uplink transmission MCS of the service, and the uplink transmission bandwidth and the uplink TBS of the service do not change. After increasing the uplink delay budget of the service to $T2_U$, the access network device needs to increase the quantity of uplink retransmissions of the service. For example, it is assumed that $T1_U$ is 5 ms, $T2_U$ is 10 ms, and the first quantity of uplink retransmissions is 2. In this case, the second quantity of uplink retransmissions is 4.

1106: The access network device indicates the second quantity of uplink retransmissions to the terminal device.

In this embodiment of this application, after determining the second quantity of uplink retransmissions, the terminal device sends service data to the access network device based on the second quantity of uplink retransmissions. For example, it is assumed that the second quantity of uplink retransmissions is 4. In this case, the terminal device sends same data to the access network device for four times.

1107: The access network device adjusts a downlink frequency domain resource of the service based on the second downlink transmission bandwidth.

1108: The access network device adjusts a downlink time domain resource of the service based on the second downlink delay budget.

1109: The access network device adjusts an uplink time domain resource of the service based on the second uplink delay budget.

1110: The access network device indicates the adjusted downlink frequency domain resource of the service and the adjusted downlink time domain resource of the service to the terminal device.

1111: The access network device indicates the adjusted uplink time domain resource of the service to the terminal device.

For a specific implementation of step 1108 to step 1111, refer to the descriptions in the embodiment corresponding to FIG. 7. Details are not described herein again.

Optionally, the access network device may indicate an adjusted downlink time-frequency resource of the service, the adjusted uplink time domain resource of the service, and the second quantity of uplink retransmissions to the terminal device through a same message. Alternatively, the access network device may indicate an adjusted downlink time-frequency resource of the service, the adjusted uplink time domain resource of the service, and the second quantity of uplink retransmissions to the terminal device through different messages.

The foregoing method embodiments describe how to increase an uplink coverage radius when the uplink coverage radius is limited. In some cases, a downlink coverage radius is limited. For example, when a transmitted service is a service with a large downlink data volume, a downlink coverage radius is far less than an uplink coverage radius. The following describes how to increase a downlink coverage radius when the downlink coverage radius is limited.

FIG. 13 is a schematic flowchart of a transmission parameter adjustment method according to an embodiment of this application. As shown in FIG. 13, the transmission parameter adjustment method includes the following step 1301 to step 1303.

1301: An access network device increases an uplink transmission bandwidth of a service from a first uplink transmission bandwidth to a second uplink transmission bandwidth, where the second uplink transmission bandwidth is less than or equal to a target uplink transmission bandwidth, and the target uplink transmission bandwidth is a smaller value between a maximum uplink bandwidth supported by a system and a maximum uplink bandwidth supported by a terminal device.

The service may be a service with a large downlink data volume. An implementation principle of step 1301 is the same as that of step 401, and details are not described herein again.

In a possible implementation, the access network device may alternatively increase an uplink transmit power of the service from a first uplink transmit power to a second uplink transmit power based on the first uplink transmission bandwidth and the second uplink transmission bandwidth, and indicate the second uplink transmit power to the terminal device. After receiving indication information that indicates the second uplink transmit power, the terminal device performs uplink transmission based on the second uplink transmit power. If the uplink transmission bandwidth of the service increases and the uplink transmit power of the service does not change, a transmit power on each resource unit decreases, uplink power spectral density decreases, and an uplink coverage radius decreases. The uplink transmit power of the service is increased from the first uplink transmit power to the second uplink transmit power, to ensure that the uplink coverage radius does not decrease.

An implementation principle of increasing the uplink transmit power of the service by the access network device is the same as a principle of increasing the downlink transmit power of the service by the access network device in the method embodiment corresponding to FIG. 4, and details are not described herein again.

1302: The access network device reduces an uplink delay budget of the service from a first uplink delay budget to a second uplink delay budget based on the second uplink transmission bandwidth.

In this embodiment of this application, an uplink transmission modulation and coding scheme (modulation and coding scheme, MCS) of the service and an uplink transport block size (transmission block size, TBS) of the service do not change. When the uplink transmission MCS of the service and the uplink TBS of the service do not change, if the uplink transmission bandwidth is increased, the uplink delay budget of the service decreases.

In a possible implementation, a specific implementation in which the access network device reduces the uplink delay budget of the service from the first uplink delay budget to the second uplink delay budget based on the second uplink transmission bandwidth is that the access network device reduces the uplink delay budget of the service from the first uplink delay budget to the second uplink delay budget based on the second uplink transmission bandwidth and a third parameter, where the third parameter includes one or more of the following parameters: the uplink TBS of the service, the uplink transmission MCS of the service, or a resource of a reference signal. The reference signal may be a demodulation reference signal (demodulation reference signal, DMRS), a channel status information reference signal (channel status information reference signal, CSI-RS), or the like. According to this possible implementation, the uplink delay budget of the service can be adjusted more accurately.

In another possible implementation, the access network device may determine a reduction factor $\alpha$ based on the first uplink transmission bandwidth and the second uplink transmission bandwidth, or the access network device may determine the reduction factor $\alpha$ based on an increasing factor $\beta$. Then, the uplink delay budget of the service is reduced from the first uplink delay budget $T1_U$ to the second uplink delay budget $T2_D$ based on the reduction factor $\alpha$, for example, the second uplink delay budget $T2_U = T1_U \times \alpha$, where $0 < \alpha < 1$. According to this possible implementation, the uplink delay budget of the service can be adjusted accurately.

A specific implementation in which the access network device determines the reduction factor $\alpha$ based on the first uplink transmission bandwidth and the second uplink transmission bandwidth may be that the access network device determines the reduction factor $\alpha$ based on the first uplink transmission bandwidth, the second uplink transmission bandwidth, and the resource of the reference signal. According to this possible implementation, the uplink delay budget of the service can be adjusted more accurately.

A specific implementation in which the access network device determines the reduction factor $\alpha$ based on the increasing factor $\beta$ may be that the access network device determines the reduction factor $\alpha$ based on the increasing factor $\beta$ and the resource of the reference signal. According to this possible implementation, the uplink delay budget of the service can be adjusted more accurately.

1303: The access network device increases a downlink delay budget of the service from a first downlink delay budget to a second downlink delay budget based on the second uplink delay budget.

In this embodiment of this application, a sum of the downlink delay budget of the service and the uplink delay budget of the service does not change. When the sum of the downlink delay budget of the service and the uplink delay budget of the service does not change, the uplink delay budget of the service decreases, and the downlink delay budget of the service can increase. Therefore, the access network device may increase the downlink delay budget of the service from the first downlink delay budget to the second downlink delay budget based on the second uplink delay budget. For example, $T2_D = T1_U + T1_D - T2_U$, where $T2_D$ is the second downlink delay budget, $T1_D$ is the first downlink delay budget, $T1_U$ is the first uplink delay budget, and $T2_U$ is the second uplink delay budget.

In the method described in FIG. 13, the uplink transmission bandwidth of the service is increased, so that the uplink delay budget of the service can be reduced and the downlink delay budget can be increased. The downlink delay budget is increased, so that a modulation order or a code rate of a downlink MCS can be reduced, to increase reliability of downlink transmission and increase a downlink coverage radius. Alternatively, the downlink delay budget is increased, so that a downlink transmission bandwidth can be reduced, to increase power spectral density of downlink transmission and increase the downlink coverage radius. Alternatively, the downlink delay budget is increased, so that a quantity of retransmissions of downlink transmission can be increased, to increase the reliability of downlink transmission and increase the downlink coverage radius. Therefore, the method described in FIG. 13 helps increase the downlink coverage radius.

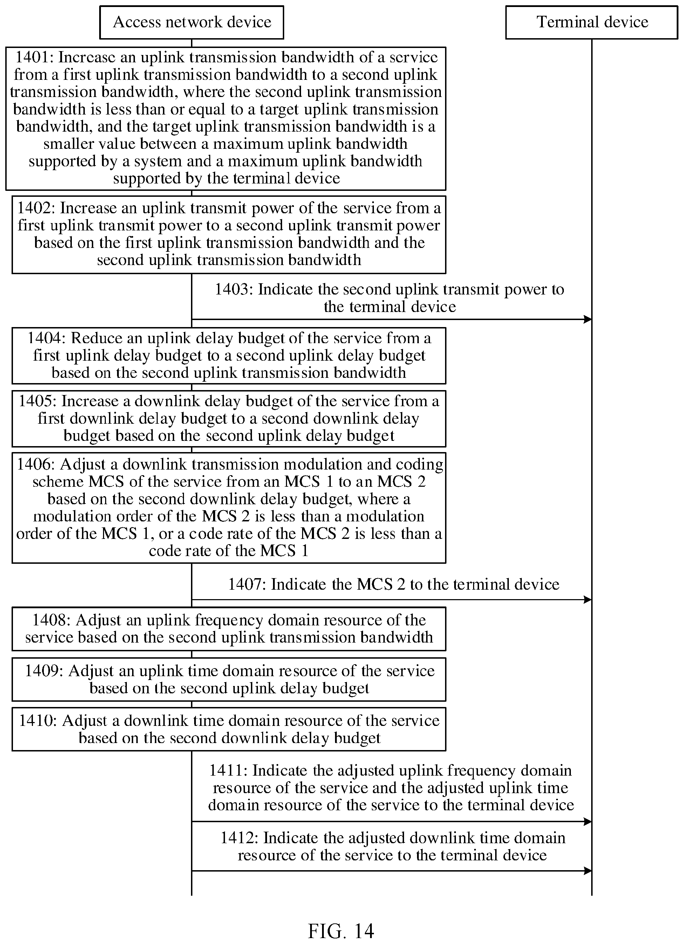

FIG. 14 is a schematic flowchart of another transmission parameter adjustment method according to an embodiment of this application. As shown in FIG. 14, the transmission parameter adjustment method includes the following step 1401 to step 1412.

1401: An access network device increases an uplink transmission bandwidth of a service from a first uplink transmission bandwidth to a second uplink transmission bandwidth, where the second uplink transmission bandwidth is less than or equal to a target uplink transmission bandwidth, and the target uplink transmission bandwidth is a smaller value between a maximum uplink bandwidth supported by a system and a maximum uplink bandwidth supported by a terminal device.

1402: The access network device increases an uplink transmit power of the service from a first uplink transmit power to a second uplink transmit power based on the first uplink transmission bandwidth and the second uplink transmission bandwidth.

1403: The access network device indicates the second uplink transmit power to the terminal device.

1404: The access network device reduces an uplink delay budget of the service from a first uplink delay budget to a second uplink delay budget based on the second uplink transmission bandwidth.

1405: The access network device increases a downlink delay budget of the service from a first downlink delay budget to a second downlink delay budget based on the second uplink delay budget.

For a specific implementation of step 1401 to step 1405, refer to the descriptions in the embodiment corresponding to FIG. 13. Details are not described herein again.

1406: The access network device adjusts a downlink transmission modulation and coding scheme MCS of the service from an MCS 1 to an MCS 2 based on the second downlink delay budget, where a modulation order of the MCS 2 is less than a modulation order of the MCS 1, or a code rate of the MCS 2 is less than a code rate of the MCS 1.

In this embodiment of this application, a downlink transmission bandwidth of the service and a downlink TBS of the service do not change. When the downlink transmission bandwidth of the service and the downlink TBS of the service do not change, if the downlink delay budget of the service increases, a modulation order or code rate of the downlink transmission MCS may be reduced. After the modulation order or code rate of the downlink transmission MCS is reduced, downlink data transmitted on each resource unit becomes less, and reliability of downlink transmission is increased, thereby increasing a downlink coverage radius.

In a possible implementation, a specific implementation in which the access network device adjusts the downlink transmission modulation and coding scheme MCS of the service from the MCS 1 to the MCS 2 based on the second downlink delay budget is that the access network device adjusts the downlink transmission MCS of the service from the MCS 1 to the MCS 2 based on the second downlink delay budget and a first parameter, where the first parameter includes one or more of the following parameters: the downlink transport block size TBS of the service, the downlink transmission bandwidth of the service, or resource overheads of a reference signal. The reference signal may include but is not limited to a demodulation reference signal (demodulation reference signal, DMRS), a channel status information reference signal (channel status information reference signal, CSI-RS), or the like. According to this possible implementation, the downlink transmission MCS of the service can be adjusted more accurately.

1407: The access network device indicates the MCS 2 to the terminal device.

In this embodiment of this application, the access network device may indicate the MCS 2 to the terminal device through a physical uplink control channel (physical downlink control channel, PDCCH). After determining the MCS 2, the terminal device may subsequently decode downlink data of the service based on the MCS 2.

1408: The access network device adjusts an uplink frequency domain resource of the service based on the second uplink transmission bandwidth.

In this embodiment of this application, because the uplink transmission bandwidth of the service is adjusted to the second uplink transmission bandwidth, the uplink frequency domain resource of the service may be adjusted based on the second uplink transmission bandwidth.

1409: The access network device adjusts an uplink time domain resource of the service based on the second uplink delay budget.

In this embodiment of this application, because the uplink delay budget of the service is adjusted to the second uplink delay budget, the uplink time domain resource of the service may be adjusted based on the second uplink delay budget.

1410: The access network device adjusts a downlink time domain resource of the service based on the second downlink delay budget.

In this embodiment of this application, because the downlink delay budget of the service is adjusted to the second downlink delay budget, the downlink time domain resource of the service may be adjusted based on the second downlink delay budget.

1411: The access network device indicates the adjusted uplink frequency domain resource of the service and the adjusted uplink time domain resource of the service to the terminal device.

In this embodiment of this application, the access network device may indicate the adjusted uplink frequency domain resource of the service and the adjusted uplink time domain resource of the service to the terminal device through the PDCCH. After determining the adjusted uplink frequency domain resource of the service and the adjusted uplink time domain resource of the service, the terminal device may send service data to the access network device on an uplink time-frequency resource of the service.

1412: The access network device indicates the adjusted downlink time domain resource of the service to the terminal device.

In this embodiment of this application, the access network device may indicate the adjusted downlink time domain resource of the service to the terminal device through the PDCCH. After determining the adjusted downlink time domain resource of the service, the terminal device may receive, on the downlink time domain resource of the service, service data sent by the access network device. Alternatively, the access network device may not indicate the adjusted downlink time domain resource of the service to the terminal device, and the terminal device may blindly detect the service data sent by the access network device.

Optionally, the access network device may indicate the MCS 2, the adjusted uplink time-frequency resource of the service, and the adjusted downlink time domain resource of the service to the terminal device through a same message. Alternatively, the access network device may indicate the MCS 2, the adjusted uplink time-frequency resource of the service, and the adjusted downlink time domain resource of the service to the terminal device through different messages.

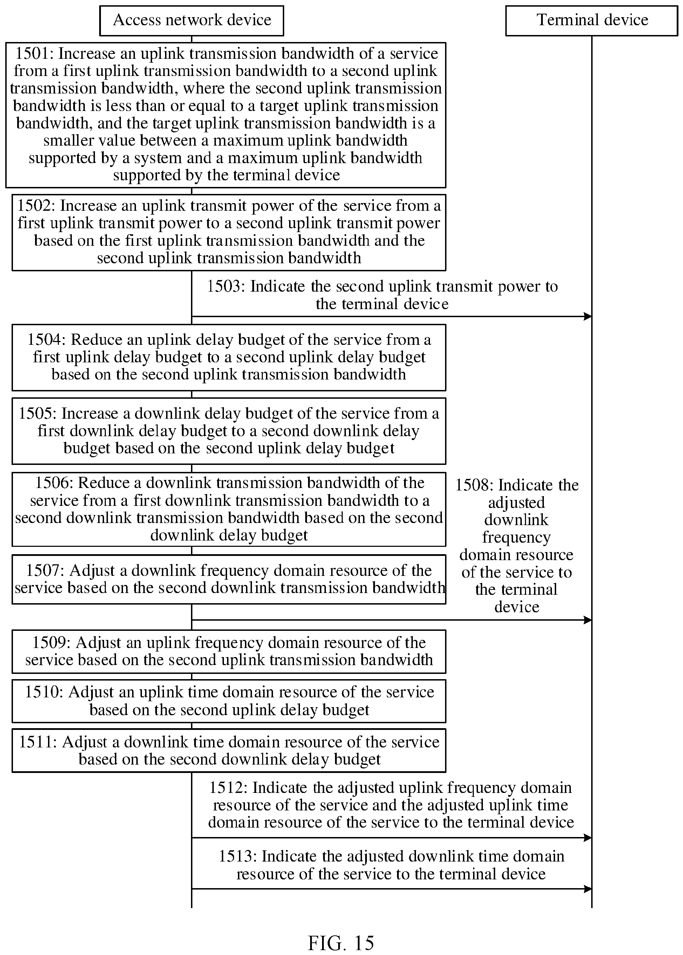

FIG. 15 is a schematic flowchart of another transmission parameter adjustment method according to an embodiment of this application. As shown in FIG. 15, the transmission parameter adjustment method includes the following step 1501 to step 1513.

1501: An access network device increases an uplink transmission bandwidth of a service from a first uplink transmission bandwidth to a second uplink transmission bandwidth, where the second uplink transmission bandwidth is less than or equal to a target uplink transmission bandwidth, and the target uplink transmission bandwidth is a smaller value between a maximum uplink bandwidth supported by a system and a maximum uplink bandwidth supported by a terminal device.

1502: The access network device increases an uplink transmit power of the service from a first uplink transmit power to a second uplink transmit power based on the first uplink transmission bandwidth and the second uplink transmission bandwidth.

1503: The access network device indicates the second uplink transmit power to the terminal device.

1504: The access network device reduces an uplink delay budget of the service from a first uplink delay budget to a second uplink delay budget based on the second uplink transmission bandwidth.

1505: The access network device increases a downlink delay budget of the service from a first downlink delay budget to a second downlink delay budget based on the second uplink delay budget.

For a specific implementation of step 1501 to step 1505, refer to the descriptions in the embodiment corresponding to FIG. 13. Details are not described herein again.

1506: The access network device reduces a downlink transmission bandwidth of the service from a first downlink transmission bandwidth to a second downlink transmission bandwidth based on the second downlink delay budget.

In this embodiment of this application, a downlink transmission MCS of the service and a downlink TBS of the service do not change. When the downlink transmission MCS of the service and the downlink TBS of the service do not change, if the downlink delay budget of the service increases, the downlink transmission bandwidth of the service may be reduced. After the downlink transmission bandwidth of the service is reduced, power spectral density of downlink transmission can be increased, to increase a downlink coverage radius.

In a possible implementation, a specific implementation in which the access network device reduces the downlink transmission bandwidth of the service from the first downlink transmission bandwidth to the second downlink transmission bandwidth based on the second downlink delay budget is that the access network device reduces the downlink transmission bandwidth of the service from the first downlink transmission bandwidth to the second downlink transmission bandwidth based on the second downlink delay budget and a second parameter, where the second parameter includes one or more of the following parameters: the downlink transport block size TBS of the service, the downlink transmission MCS of the service, or resource overheads of a reference signal. The reference signal may be a demodulation reference signal (demodulation reference signal, DMRS), a channel status information reference signal (channel status information reference signal, CSI-RS), or the like. According to this possible implementation, the downlink transmission bandwidth of the service can be adjusted more accurately.

1507: The access network device adjusts a downlink frequency domain resource of the service based on the second downlink transmission bandwidth.

In this embodiment of this application, after reducing the downlink transmission bandwidth of the service from the first downlink transmission bandwidth to the second downlink transmission bandwidth, the access network device adjusts the downlink frequency domain resource of the service based on the second downlink transmission bandwidth.

1508: The access network device indicates the adjusted downlink frequency domain resource of the service to the terminal device.

In this embodiment of this application, after adjusting the downlink frequency domain resource of the service based on the second downlink transmission bandwidth, the access network device indicates the adjusted downlink frequency domain resource of the service to the terminal device. The access network device may indicate the adjusted downlink frequency domain resource of the service to the terminal device through a PDCCH. After determining the adjusted downlink frequency domain resource of the service, the terminal device may receive, based on the adjusted downlink frequency domain resource of the service, data sent by the access network device.

1509: The access network device adjusts an uplink frequency domain resource of the service based on the second uplink transmission bandwidth.

1510: The access network device adjusts an uplink time domain resource of the service based on the second uplink delay budget.

1511: The access network device adjusts a downlink time domain resource of the service based on the second downlink delay budget.

1512: The access network device indicates the adjusted uplink frequency domain resource of the service, the adjusted uplink time domain resource of the service, and the adjusted downlink time domain resource of the service to the terminal device.

1513: The access network device indicates the adjusted downlink time domain resource of the service to the terminal device.

For a specific implementation of step 1509 to step 1513, refer to the descriptions in the embodiment corresponding to FIG. 14. Details are not described herein again.

Optionally, the access network device may indicate an adjusted uplink time-frequency resource of the service and an adjusted downlink time-frequency resource of the service to the terminal device through a same message. Alternatively, the access network device may indicate the adjusted uplink time-frequency resource of the service and the adjusted downlink time-frequency resource of the service to the terminal device through different messages.

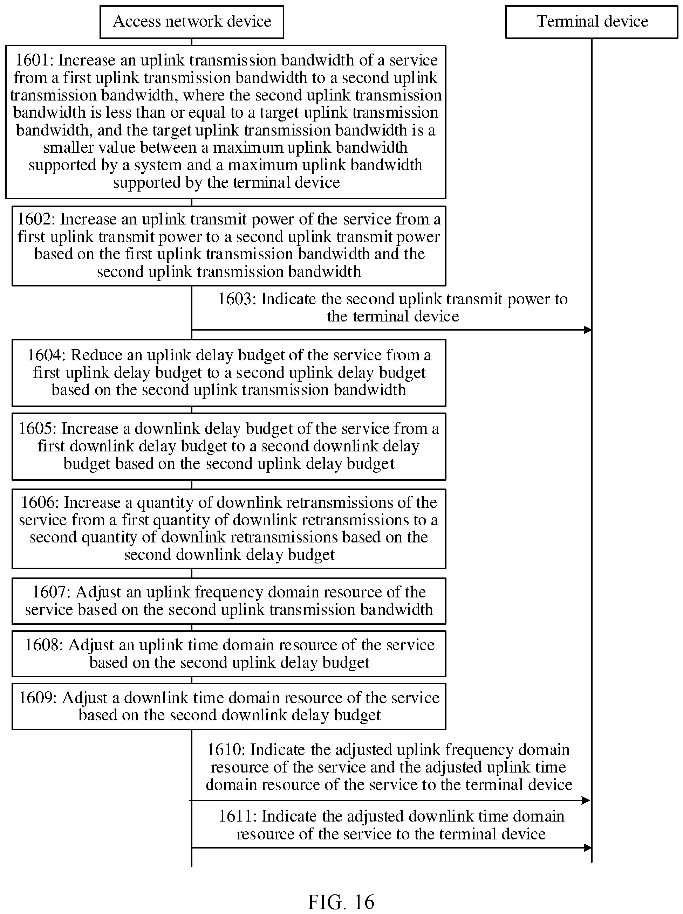

FIG. 16 is a schematic flowchart of another transmission parameter adjustment method according to an embodiment of this application. As shown in FIG. 16, the transmission parameter adjustment method includes the following step 1601 to step 1611.

1601: An access network device increases an uplink transmission bandwidth of a service from a first uplink transmission bandwidth to a second uplink transmission bandwidth, where the second uplink transmission bandwidth is less than or equal to a target uplink transmission bandwidth, and the target uplink transmission bandwidth is a smaller value between a maximum uplink bandwidth supported by a system and a maximum uplink bandwidth supported by a terminal device.

1602: The access network device increases an uplink transmit power of the service from a first uplink transmit power to a second uplink transmit power based on the first uplink transmission bandwidth and the second uplink transmission bandwidth.

1603: The access network device indicates the second uplink transmit power to the terminal device.

1604: The access network device reduces an uplink delay budget of the service from a first uplink delay budget to a second uplink delay budget based on the second uplink transmission bandwidth.

1605: The access network device increases a downlink delay budget of the service from a first downlink delay budget to a second downlink delay budget based on the second uplink delay budget.

For a specific implementation of step 1601 to step 1605, refer to the descriptions in the embodiment corresponding to FIG. 13. Details are not described herein again.

1606: The access network device increases a quantity of downlink retransmissions of the service from a first quantity of downlink retransmissions to a second quantity of downlink retransmissions based on the second downlink delay budget.

In this embodiment of this application, a downlink transmission MCS of the service, a downlink transmission bandwidth of the service, and a downlink TBS of the service do not change. When the downlink transmission MCS of the service, the downlink transmission bandwidth of the service, and the downlink TBS of the service do not change, if the downlink delay budget of the service increases, the quantity of downlink retransmissions of the service may be increased. After the quantity of downlink retransmissions of the service is increased, reliability of downlink transmission can be increased, to increase a downlink coverage radius. The quantity of downlink retransmissions is a quantity of times that the access network device repeatedly sends same data. The access network device may perform downlink retransmission only when downlink transmission fails. Alternatively, the access network device may perform downlink retransmission when downlink transmission does not fail.

1607: The access network device adjusts an uplink frequency domain resource of the service based on the second uplink transmission bandwidth.

1608: The access network device adjusts an uplink time domain resource of the service based on the second uplink delay budget.

1609: The access network device adjusts a downlink time domain resource of the service based on the second downlink delay budget.

1610: The access network device indicates the adjusted uplink frequency domain resource of the service and the adjusted uplink time domain resource of the service to the terminal device.

1611: The access network device indicates the adjusted downlink time domain resource of the service to the terminal device.

For a specific implementation of step 1607 to step 1611, refer to the descriptions in the embodiment corresponding to FIG. 14. Details are not described herein again.

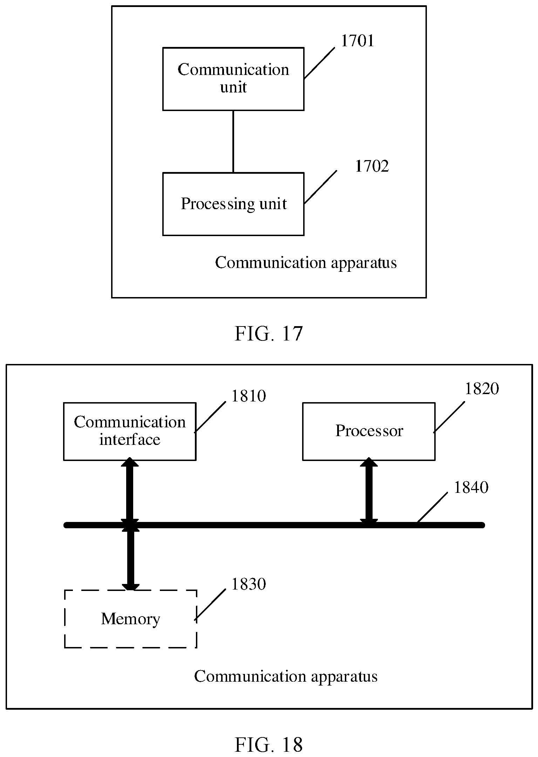

FIG. 17 is a schematic diagram of a structure of a communication apparatus according to an embodiment of this application. The communication apparatus shown in FIG. 17 may be configured to perform some or all functions of the access network device in the method embodiments described in FIG. 4 to FIG. 12. The apparatus may be an access network device, an apparatus in the access network device, or an apparatus that can coordinate with the access network device. The communication apparatus may alternatively be a chip system. The communication apparatus shown in FIG. 17 may include a communication unit 1701 and a processing unit 1702. The processing unit 1702 is configured to perform data processing. The communication unit 1701 is integrated with a receiving unit and a sending unit. The communication unit 1701 may also be referred to as a transceiver unit. Alternatively, the communication unit 1701 may be split into the receiving unit and the sending unit. The following processing unit 1702 is similar to the communication unit 1701, and details are not described in the following again.

The processing unit 1702 is configured to increase a downlink transmission bandwidth of a service from a first downlink transmission bandwidth to a second downlink transmission bandwidth, where the second downlink transmission bandwidth is less than or equal to a target downlink transmission bandwidth, and the target downlink transmission bandwidth is a smaller value between a maximum downlink bandwidth supported by a system and a maximum downlink bandwidth supported by a terminal device. The processing unit 1702 is further configured to reduce a downlink delay budget of the service from a first downlink delay budget to a second downlink delay budget based on the second downlink transmission bandwidth. The processing unit 1702 is further configured to increase an uplink delay budget of the service from a first uplink delay budget to a second uplink delay budget based on the second downlink delay budget.

In a possible implementation, the processing unit 1702 is further configured to increase a downlink transmit power of the service from a first downlink transmit power to a second downlink transmit power based on the first downlink transmission bandwidth and the second downlink transmission bandwidth.

In a possible implementation, the processing unit 1702 is further configured to adjust an uplink transmission modulation and coding scheme MCS of the service from an MCS 1 to an MCS 2 based on the second uplink delay budget, where a modulation order of the MCS 2 is less than a modulation order of the MCS 1, or a code rate of the MCS 2 is less than a code rate of the MCS 1. The communication unit 1701 is configured to indicate the MCS 2 to the terminal device.

In a possible implementation, a manner in which the processing unit 1702 adjusts the uplink transmission modulation and coding scheme MCS of the service from the MCS 1 to the MCS 2 based on the second uplink delay budget is specifically: adjusting the uplink transmission MCS of the service from the MCS 1 to the MCS 2 based on the second uplink delay budget and a first parameter, where the first parameter includes one or more of the following parameters: an uplink transport block size TBS of the service, an uplink transmission bandwidth of the service, or resource overheads of a reference signal.

In a possible implementation, the processing unit 1702 is further configured to: reduce the uplink transmission bandwidth of the service from a first uplink transmission bandwidth to a second uplink transmission bandwidth based on the second uplink delay budget, and adjust an uplink frequency domain resource of the service based on the second uplink transmission bandwidth. The communication unit 1701 is configured to indicate the adjusted uplink frequency domain resource of the service to the terminal device.

In a possible implementation, a manner in which the processing unit 1702 reduces the uplink transmission bandwidth of the service from the first uplink transmission bandwidth to the second uplink transmission bandwidth based on the second uplink delay budget is specifically: reducing the uplink transmission bandwidth of the service from the first uplink transmission bandwidth to the second uplink transmission bandwidth based on the second uplink delay budget and a second parameter, where the second parameter includes one or more of the following parameters: the uplink transport block size TBS of the service, the uplink transmission MCS of the service, or the resource overheads of the reference signal.

In a possible implementation, the processing unit 1702 is further configured to increase a quantity of uplink retransmissions of the service from a first quantity of uplink retransmissions to a second quantity of uplink retransmissions based on the second uplink delay budget. The communication unit 1701 is configured to indicate the second quantity of uplink retransmissions to the terminal device.

In a possible implementation, a manner in which the processing unit 1702 reduces the downlink delay budget of the service from the first downlink delay budget to the second downlink delay budget based on the second downlink transmission bandwidth is specifically: reducing the downlink delay budget of the service from the first downlink delay budget to the second downlink delay budget based on the second downlink transmission bandwidth and a third parameter, where the third parameter includes one or more of the following parameters: a downlink transport block size TBS of the service, a downlink transmission MCS of the service, or a resource of the reference signal.

In a possible implementation, a manner in which the processing unit 1702 increases the uplink delay budget of the service from the first uplink delay budget to the second uplink delay budget based on the second downlink delay budget is specifically: $T2_U = T1_D + T1_U - T2_D$, where $T2_U$ is the second uplink delay budget, $T1_U$ is the first uplink delay budget, $T1_D$ is the first downlink delay budget, and $T2_D$ is the second downlink delay budget.

In a possible implementation, the processing unit 1702 is further configured to: adjust a downlink frequency domain resource of the service based on the second downlink transmission bandwidth, adjust a downlink time domain resource of the service based on the second downlink delay budget, and adjust an uplink time domain resource of the service based on the second uplink delay budget. The communication unit 1701 is further configured to indicate the adjusted downlink frequency domain resource of the service and the adjusted downlink time domain resource of the service to the terminal device. The communication unit 1701 is further configured to indicate the adjusted uplink time domain resource of the service to the terminal device.

FIG. 17 is a schematic diagram of a structure of a communication apparatus according to an embodiment of this application. The communication apparatus shown in FIG. 17 may be configured to perform some or all functions of the access network device in the method embodiments described in FIG. 13 to FIG. 16. The apparatus may be an access network device, an apparatus in the access network device, or an apparatus that can coordinate with the access network device. The communication apparatus may alternatively be a chip system. The communication apparatus shown in FIG. 17 may include a communication unit 1701 and a processing unit 1702.

The processing unit 1702 is configured to increase an uplink transmission bandwidth of a service from a first uplink transmission bandwidth to a second uplink transmission bandwidth, where the second uplink transmission bandwidth is less than or equal to a target uplink transmission bandwidth, and the target uplink transmission bandwidth is a smaller value between a maximum uplink bandwidth supported by a system and a maximum uplink bandwidth supported by a terminal device. The processing unit 1702 is further configured to reduce an uplink delay budget of the service from a first uplink delay budget to a second uplink delay budget based on the second uplink transmission bandwidth. The processing unit 1702 is further configured to increase a downlink delay budget of the service from a first downlink delay budget to a second downlink delay budget based on the second uplink delay budget.

In a possible implementation, the processing unit 1702 is further configured to increase an uplink transmit power of the service from a first uplink transmit power to a second uplink transmit power based on the first uplink transmission bandwidth and the second uplink transmission bandwidth. The communication unit 1701 is configured to indicate the second uplink transmit power to the terminal device.

In a possible implementation, the processing unit 1702 is further configured to adjust a downlink transmission modulation and coding scheme MCS of the service from an MCS 1 to an MCS 2 based on the second downlink delay budget, where a modulation order of the MCS 2 is less than a modulation order of the MCS 1, or a code rate of the MCS 2 is less than a code rate of the MCS 1. The communication unit 1701 is configured to indicate the MCS 2 to the terminal device.

In a possible implementation, a manner in which the processing unit 1702 adjusts the downlink transmission modulation and coding scheme MCS of the service from the MCS 1 to the MCS 2 based on the second downlink delay budget is specifically: adjusting the downlink transmission MCS of the service from the MCS 1 to the MCS 2 based on the second downlink delay budget and a first parameter, where the first parameter includes one or more of the following parameters: a downlink transport block size TBS of the service, a downlink transmission bandwidth of the service, or resource overheads of a reference signal.

In a possible implementation, the processing unit 1702 is further configured to reduce the downlink transmission bandwidth of the service from a first downlink transmission bandwidth to a second downlink transmission bandwidth based on the second downlink delay budget. The processing unit 1702 is further configured to adjust a downlink frequency domain resource of the service based on the second downlink transmission bandwidth. The communication unit 1701 is configured to indicate the adjusted downlink frequency domain resource of the service to the terminal device.

In a possible implementation, a manner in which the processing unit 1702 reduces the downlink transmission bandwidth of the service from the first downlink transmission bandwidth to the second downlink transmission band based on the second downlink delay budget is specifically: reducing the downlink transmission bandwidth of the service from the first downlink transmission bandwidth to the second downlink transmission bandwidth based on the second downlink delay budget and a second parameter, where the second parameter includes one or more of the following parameters: the downlink transport block size TBS of the service, the downlink transmission MCS of the service, or the resource overheads of the reference signal.

In a possible implementation, the processing unit 1702 is further configured to increase a quantity of downlink retransmissions of the service from a first quantity of downlink retransmissions to a second quantity of downlink retransmissions based on the second downlink delay budget.

In a possible implementation, a manner in which the processing unit 1702 reduces the uplink delay budget of the service from the first uplink delay budget to the second uplink delay budget based on the second uplink transmission bandwidth is specifically: reducing the uplink delay budget of the service from the first uplink delay budget to the second uplink delay budget based on the second uplink transmission bandwidth and a third parameter, where the third parameter includes one or more of the following parameters: an uplink transport block size TBS of the service, an uplink transmission MCS of the service, or a resource of the reference signal.

In a possible implementation, a manner in which the processing unit 1702 increases the downlink delay budget of the service from the first downlink delay budget to the second downlink delay budget based on the second uplink delay budget is specifically: $T2_D = T1_U + T1_D - T2_U$, where $T2_D$ is the second downlink delay budget, $T1_D$ is the first downlink delay budget, $T1_U$ is the first uplink delay budget, and $T2_U$ is the second uplink delay budget.

In a possible implementation, the processing unit 1702 is further configured to: adjust an uplink frequency domain resource of the service based on the second uplink transmission bandwidth, adjust an uplink time domain resource of the service based on the second uplink delay budget, and adjust a downlink time domain resource of the service based on the second downlink delay budget. The communication unit 1701 is further configured to indicate the adjusted uplink frequency domain resource of the service and the adjusted uplink time domain resource of the service to the terminal device. The communication unit 1701 is further configured to indicate the adjusted downlink time domain resource of the service to the terminal device.

FIG. 18 shows a communication apparatus 180 according to an embodiment of this application. The communication apparatus 180 is configured to implement functions of the access network device in FIG. 4 to FIG. 16. The apparatus may be an access network device or an apparatus used in the access network device. The apparatus used in the access network device may be a chip system or a chip in the access network device. The chip system may include a chip, or may include a chip and another discrete component.

The communication apparatus 180 includes at least one processor 1820, configured to implement a data processing function of the access network device in the methods provided in embodiments of this application. The communication apparatus 180 may further include a communication interface 1810, configured to implement receiving and sending operations of the access network device in the methods provided in embodiments of this application. In embodiments of this application, the communication interface may be a transceiver, a circuit, a bus, a module, or another type of communication interface, and is configured to communicate with another device through a transmission medium. For example, the communication interface 1810 is used by an apparatus in the communication apparatus 180 to communicate with another device. The processor 1820 receives and sends data through the communication interface 1810, and is configured to implement the methods in the foregoing method embodiments in FIG. 4 to FIG. 16.

The communication apparatus 180 may further include at least one memory 1830, configured to store program instructions and/or data. The memory 1830 is coupled to the processor 1820. Couplings in this embodiment of this application are indirect couplings or communication connections between apparatuses, units, or modules, may be electrical, mechanical, or in another form, and are used for information exchange between the apparatuses, the units, or the modules. The processor 1820 may cooperate with the memory 1830. The processor 1820 may execute the program instructions stored in the memory 1830. At least one of the at least one memory may be included in the processor.

After the communication apparatus 180 is powered on, the processor 1820 may read a software program in the memory 1830, interpret and execute instructions of the software program, and process data of the software program. When data needs to be sent wirelessly, the processor 1820 performs baseband processing on the data to be sent, and then outputs a baseband signal to a radio frequency circuit (not shown in the figure). The radio frequency circuit performs radio frequency processing on the baseband signal, and then sends out a radio frequency signal through an antenna in a form of an electromagnetic wave. When data is sent to the communication apparatus 180, the radio frequency circuit receives a radio frequency signal through the antenna, converts the radio frequency signal into a baseband signal, and outputs the baseband signal to the processor 1820. The processor 1820 converts the baseband signal into data and processes the data.

In another implementation, the radio frequency circuit and the antenna may be disposed independently of the processor 1820 that performs baseband processing. For example, in a distributed scenario, the radio frequency circuit and the antenna may be disposed remotely independent of the communication apparatus.

A specific connection medium between the communication interface 1810, the processor 1820, and the memory 1830 is not limited in this embodiment of this application. In this embodiment of this application, the memory 1830, the processor 1820, and the communication interface 1810 are connected through a bus 1840 in FIG. 18. The bus is represented by a bold line in FIG. 18. A connection manner between other components is merely schematically described, and imposes no limitation. The bus may be classified into an address bus, a data bus, a control bus, and the like. For ease of representation, only one bold line is used to represent the bus in FIG. 18, but this does not indicate that there is only one bus or only one type of bus.

When the communication apparatus 180 is specifically an apparatus used in the access network device, for example, when the communication apparatus 180 is specifically a chip or a chip system, the communication interface 1810 may output or receive a baseband signal. When the communication apparatus 180 is specifically the access network device, the communication interface 1810 may output or receive a radio frequency signal. In this embodiment of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, operations, and logical block diagrams disclosed in embodiments of this application. The general-purpose processor may be a microprocessor, any conventional processor, or the like. The operations in the methods disclosed with reference to embodiments of this application may be directly performed and completed by a hardware processor, or may be performed and completed by a combination of hardware in the processor and a software module.

An embodiment of this application further provides a computer-readable storage medium. The computer-readable storage medium stores instructions. When the instructions are run on a processor, the method procedures in the foregoing method embodiments are implemented.

An embodiment of this application further provides a computer program product. When the computer program product runs on a processor, the method procedures in the foregoing method embodiments are implemented.

It should be noted that, for brief description, the foregoing method embodiment is represented as a combination of a series of actions. However, a person skilled in the art should understand that this application is not limited to the described order of the actions, because according to this application, some operations may be performed in other orders or simultaneously. It should be further appreciated by a person skilled in the art that embodiments described in this specification all belong to example embodiments, and the involved actions and modules are not necessarily required by this application.

Cross reference may be made to descriptions of embodiments provided in this application, and the descriptions of embodiments have different focuses. For a part not described in detail in an embodiment, refer to related descriptions of another embodiment. For ease of description and brevity, for functions of the apparatuses and devices provided in embodiments of this application and operations performed by the apparatuses and devices, refer to related descriptions of the method embodiments of this application. The method embodiments and the apparatus embodiments may also be mutually referenced, combined, or cited.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive Solid State Drive (SSD)), or the like.

**Claims**

1. A transmission parameter adjustment method, wherein the method comprises:

   increasing a downlink transmission bandwidth of a service from a first downlink transmission bandwidth to a second downlink transmission bandwidth, wherein the second downlink transmission bandwidth is less than or equal to a target downlink transmission bandwidth, and the target downlink transmission bandwidth is a smaller value between a maximum downlink bandwidth supported by a system and a maximum downlink bandwidth supported by a terminal device;
   reducing a downlink delay budget of the service from a first downlink delay budget to a second downlink delay budget based on the second downlink transmission bandwidth; and
   increasing an uplink delay budget of the service from a first uplink delay budget to a second uplink delay budget based on the second downlink delay budget.

2. The method according to claim 1, wherein the method further comprises:
   increasing a downlink transmit power of the service from a first downlink transmit power to a second downlink transmit power based on the first downlink transmission bandwidth and the second downlink transmission bandwidth.

3. The method according to claim 1 or 2, wherein the method further comprises:

   adjusting an uplink transmission modulation and coding scheme MCS of the service from an MCS 1 to an MCS 2 based on the second uplink delay budget, wherein a modulation order of the MCS 2 is less than a modulation order of the MCS 1, or a code rate of the MCS 2 is less than a code rate of the MCS 1; and
   indicating the MCS 2 to the terminal device.

4. The method according to claim 3, wherein the adjusting an uplink transmission modulation and coding scheme MCS of the service from an MCS 1 to an MCS 2 based on the second uplink delay budget comprises:
   adjusting the uplink transmission MCS of the service from the MCS 1 to the MCS 2 based on the second uplink delay budget and a first parameter, wherein the first parameter comprises one or more of the following parameters: an uplink transport block size TBS of the service, an uplink transmission bandwidth of the service, or resource overheads of a reference signal.

5. The method according to claim 1 or 2, wherein the method further comprises:

   reducing an uplink transmission bandwidth of the service from a first uplink transmission bandwidth to a second uplink transmission bandwidth based on the second uplink delay budget;
   adjusting an uplink frequency domain resource of the service based on the second uplink transmission bandwidth; and
   indicating the adjusted uplink frequency domain resource of the service to the terminal device.

6. The method according to claim 5, wherein the reducing an uplink transmission bandwidth of the service from a first uplink transmission bandwidth to a second uplink transmission bandwidth based on the second uplink delay budget comprises:
   reducing the uplink transmission bandwidth of the service from the first uplink transmission bandwidth to the second uplink transmission bandwidth based on the second uplink delay budget and a second parameter, wherein the second parameter comprises one or more of the following parameters: an uplink transport block size TBS of the service, an uplink transmission MCS of the service, or resource overheads of a reference signal.

7. The method according to claim 1 or 2, wherein the method further comprises:

   increasing a quantity of uplink retransmissions of the service from a first quantity of uplink retransmissions to a second quantity of uplink retransmissions based on the second uplink delay budget; and
   indicating the second quantity of uplink retransmissions to the terminal device.

8. The method according to any one of claims 1 to 7, wherein the reducing a downlink delay budget of the service from a first downlink delay budget to a second downlink delay budget based on the second downlink transmission bandwidth comprises:
   reducing the downlink delay budget of the service from the first downlink delay budget to the second downlink delay budget based on the second downlink transmission bandwidth and a third parameter, wherein the third parameter comprises one or more of the following parameters: a downlink transport block size TBS of the service, a downlink transmission MCS of the service, or a resource of the reference signal.

9. The method according to any one of claims 1 to 8, wherein the increasing an uplink delay budget of the service from a first uplink delay budget to a second uplink delay budget based on the second downlink delay budget comprises:
   $T2_U = T1_D + T1_U - T2_D$, wherein $T2_U$ is the second uplink delay budget, $T1_U$ is the first uplink delay budget, $T1_D$ is the first downlink delay budget, and $T2_D$ is the second downlink delay budget.

10. The method according to any one of claims 1 to 9, wherein the method further comprises:

    adjusting a downlink frequency domain resource of the service based on the second downlink transmission bandwidth;
    adjusting a downlink time domain resource of the service based on the second downlink delay budget;
    adjusting an uplink time domain resource of the service based on the second uplink delay budget;
    indicating the adjusted downlink frequency domain resource of the service and the adjusted downlink time domain resource of the service to the terminal device; and

indicating the adjusted uplink time domain resource of the service to the terminal device.

11. A transmission parameter adjustment method, wherein the method comprises:

increasing an uplink transmission bandwidth of a service from a first uplink transmission bandwidth to a second uplink transmission bandwidth, wherein the second uplink transmission bandwidth is less than or equal to a target uplink transmission bandwidth, and the target uplink transmission bandwidth is a smaller value between a maximum uplink bandwidth supported by a system and a maximum uplink bandwidth supported by a terminal device;

reducing an uplink delay budget of the service from a first uplink delay budget to a second uplink delay budget based on the second uplink transmission bandwidth; and

increasing a downlink delay budget of the service from a first downlink delay budget to a second downlink delay budget based on the second uplink delay budget.

12. The method according to claim 11, wherein the method further comprises:

increasing an uplink transmit power of the service from a first uplink transmit power to a second uplink transmit power based on the first uplink transmission bandwidth and the second uplink transmission bandwidth; and

indicating the second uplink transmit power to the terminal device.

13. The method according to claim 11 or 12, wherein the method further comprises:

adjusting a downlink transmission modulation and coding scheme MCS of the service from an MCS 1 to an MCS 2 based on the second downlink delay budget, wherein a modulation order of the MCS 2 is less than a modulation order of the MCS 1, or a code rate of the MCS 2 is less than a code rate of the MCS 1; and

indicating the MCS 2 to the terminal device.

14. The method according to claim 13, wherein the adjusting a downlink transmission modulation and coding scheme MCS of the service from an MCS 1 to an MCS 2 based on the second downlink delay budget comprises:

adjusting the downlink transmission MCS of the service from the MCS 1 to the MCS 2 based on the second downlink delay budget and a first parameter, wherein the first parameter comprises one or more of the following parameters: a downlink transport block size TBS of the service, a downlink transmission bandwidth of the service, or resource overheads of a reference signal.

15. The method according to claim 11 or 12, wherein the method further comprises:

reducing a downlink transmission bandwidth of the service from a first downlink transmission bandwidth to a second downlink transmission bandwidth based on the second downlink delay budget;

adjusting a downlink frequency domain resource of the service based on the second downlink transmission bandwidth; and

indicating the adjusted downlink frequency domain resource of the service to the terminal device.

16. The method according to claim 15, wherein the reducing a downlink transmission bandwidth of the service from a first downlink transmission bandwidth to a second downlink transmission bandwidth based on the second downlink delay budget comprises:

reducing the downlink transmission bandwidth of the service from the first downlink transmission bandwidth to the second downlink transmission bandwidth based on the second downlink delay budget and a second parameter, wherein the second parameter comprises one or more of the following parameters: a downlink transport block size TBS of the service, a downlink transmission MCS of the service, or resource overheads of a reference signal.

17. The method according to claim 11 or 12, wherein the method further comprises:

increasing a quantity of downlink retransmissions of the service from a first quantity of downlink retransmissions to a second quantity of downlink retransmissions based on the second downlink delay budget.

18. The method according to any one of claims 11 to 17, wherein the reducing an uplink delay budget of the service from a first uplink delay budget to a second uplink delay budget based on the second uplink transmission bandwidth comprises:

reducing the uplink delay budget of the service from the first uplink delay budget to the second uplink delay budget based on the second uplink transmission bandwidth and a third parameter, wherein the third parameter comprises one or more of the following parameters: an uplink transport block size TBS of the service, an uplink transmission MCS of the service, or a resource of the reference signal.

19. The method according to any one of claims 11 to 18, wherein the increasing a downlink delay budget of the service from a first downlink delay budget to a second downlink delay budget based on the second uplink delay budget comprises:

$T2_D = T1_U + T1_D - T2_U$, wherein $T2_D$ is the second downlink delay budget, $T1_D$ is the first downlink delay budget, $T1_U$ is the first uplink delay budget, and $T2_U$ is the second uplink delay budget.

20. The method according to any one of claims 11 to 19, wherein the method further comprises:

adjusting an uplink frequency domain resource of the service based on the second uplink transmission bandwidth;
adjusting an uplink time domain resource of the service based on the second uplink delay budget;
adjusting a downlink time domain resource of the service based on the second downlink delay budget;
indicating the adjusted uplink frequency domain resource of the service and the adjusted uplink time domain resource of the service to the terminal device; and
indicating the adjusted downlink time domain resource of the service to the terminal device.

21. A communication apparatus, comprising a module configured to perform the method according to any one of claims 1 to 10, or comprising a module configured to perform the method according to any one of claims 11 to 20.

22. A communication apparatus, comprising a processor and a memory, wherein the processor is coupled to the memory, and the processor is configured to implement the method according to any one of claims 1 to 10, or the processor is configured to implement the method according to any one of claims 11 to 20.

23. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus, and the processor is configured to implement the method according to any one of claims 1 to 10 by using a logic circuit or by executing code instructions, or the processor is configured to implement the method according to any one of claims 11 to 20 by using a logic circuit or by executing code instructions.

24. A computer-readable storage medium, wherein the storage medium stores a computer program or instructions, and when the computer program or the instructions are executed by a communication apparatus, the method according to any one of claims 1 to 10 is implemented, or the method according to any one of claims 11 to 20 is implemented.

25. A computer program product, wherein when a computer reads and executes the computer program product, the computer is enabled to perform the method according to any one of claims 1 to 10, or the computer is enabled to perform the method according to any one of claims 11 to 20.

Access network
device

Uplink

Downlink

Terminal
device

Cloud/Edge cloud

FIG. 1

| Motion capture | Compression coding | Uplink transmission | Decoding | Logic calculation | Basic rendering | Coding compression | Downlink transmission | Decoding | Head rendering | Refresh display |
|---|---|---|---|---|---|---|---|---|---|---|

Cloud rendering and streaming

Terminal refresh display

FIG. 2

EP 4 277 346 A1

Uplink

Downlink

Terminal
device

Access network
device

FIG. 3

401: An access network device increases a downlink
transmission bandwidth of a service from a first
downlink transmission bandwidth to a second
downlink transmission bandwidth, where the second
downlink transmission bandwidth is less than or equal
to a target downlink transmission bandwidth, and the
target downlink transmission bandwidth is a smaller
value between a maximum downlink bandwidth
supported by a system and a maximum downlink
bandwidth supported by a terminal device

402: The access network device reduces a downlink
delay budget of the service from a first downlink
delay budget to a second downlink delay budget based
on the second downlink transmission bandwidth

403: The access network device increases an uplink
delay budget of the service from a first uplink delay
budget to a second uplink delay budget based on the
second downlink delay budget

FIG. 4

FIG. 5

FIG. 6

| Access network device | Terminal device |
|---|---|

701: Increase a downlink transmission bandwidth of a service from a first downlink transmission bandwidth to a second downlink transmission bandwidth, where the second downlink transmission bandwidth is less than or equal to a target downlink transmission bandwidth, and the target downlink transmission bandwidth is a smaller value between a maximum downlink bandwidth supported by a system and a maximum downlink bandwidth supported by the terminal device

702: Increase a downlink transmit power of the service from a first downlink transmit power to a second downlink transmit power based on the first downlink transmission bandwidth and the second downlink transmission bandwidth

703: Reduce a downlink delay budget of the service from a first downlink delay budget to a second downlink delay budget based on the second downlink transmission bandwidth

704: Increase an uplink delay budget of the service from a first uplink delay budget to a second uplink delay budget based on the second downlink delay budget

705: Adjust an uplink transmission modulation and coding scheme MCS of the service from an MCS 1 to an MCS 2 based on the second uplink delay budget, where a modulation order of the MCS 2 is less than a modulation order of the MCS 1, or a code rate of the MCS 2 is less than a code rate of the MCS 1

706: Indicate the MCS 2 to the terminal device

707: Adjust a downlink frequency domain resource of the service based on the second downlink transmission bandwidth

708: Adjust a downlink time domain resource of the service based on the second downlink delay budget

709: Adjust an uplink time domain resource of the service based on the second uplink delay budget

710: Indicate the adjusted downlink frequency domain resource of the service and the adjusted downlink time domain resource of the service to the terminal device

711: Indicate the adjusted uplink time domain resource of the service to the terminal device

FIG. 7

FIG. 8

| Access network device | | Terminal device |
|---|---|---|

**901:** Increase a downlink transmission bandwidth of a service from a first downlink transmission bandwidth to a second downlink transmission bandwidth, where the second downlink transmission bandwidth is less than or equal to a target downlink transmission bandwidth, and the target downlink transmission bandwidth is a smaller value between a maximum downlink bandwidth supported by a system and a maximum downlink bandwidth supported by the terminal device

**902:** Increase a downlink transmit power of the service from a first downlink transmit power to a second downlink transmit power based on the first downlink transmission bandwidth and the second downlink transmission bandwidth

**903:** Reduce a downlink delay budget of the service from a first downlink delay budget to a second downlink delay budget based on the second downlink transmission bandwidth

**904:** Increase an uplink delay budget of the service from a first uplink delay budget to a second uplink delay budget based on the second downlink delay budget

**905:** Reduce an uplink transmission bandwidth of the service from a first uplink transmission bandwidth to a second uplink transmission bandwidth based on the second uplink delay budget

**907:** Indicate the adjusted uplink frequency domain resource of the service to the terminal device

**906:** Adjust an uplink frequency domain resource of the service based on the second uplink transmission bandwidth

**908:** Adjust a downlink frequency domain resource of the service based on the second downlink transmission bandwidth

**909:** Adjust a downlink time domain resource of the service based on the second downlink delay budget

**910:** Adjust an uplink time domain resource of the service based on the second uplink delay budget

**911:** Indicate the adjusted downlink frequency domain resource of the service and the adjusted downlink time domain resource of the service to the terminal device

**912:** Indicate the adjusted uplink time domain resource of the service to the terminal device

FIG. 9

FIG. 10

| Access network device | | Terminal device |
|---|---|---|

1101: Increase a downlink transmission bandwidth of a service from a first downlink transmission bandwidth to a second downlink transmission bandwidth, where the second downlink transmission bandwidth is less than or equal to a target downlink transmission bandwidth, and the target downlink transmission bandwidth is a smaller value between a maximum downlink bandwidth supported by a system and a maximum downlink bandwidth supported by the terminal device

1102: Increase a downlink transmit power of the service from a first downlink transmit power to a second downlink transmit power based on the first downlink transmission bandwidth and the second downlink transmission bandwidth

1103: Reduce a downlink delay budget of the service from a first downlink delay budget to a second downlink delay budget based on the second downlink transmission bandwidth

1104: Increase an uplink delay budget of the service from a first uplink delay budget to a second uplink delay budget based on the second downlink delay budget

1105: Increase a quantity of uplink retransmissions of the service from a first quantity of uplink retransmissions to a second quantity of uplink retransmissions based on the second uplink delay budget

1106: Indicate the second quantity of uplink retransmissions to the terminal device

1107: Adjust a downlink frequency domain resource of the service based on the second downlink transmission bandwidth

1108: Adjust a downlink time domain resource of the service based on the second downlink delay budget

1109: Adjust an uplink time domain resource of the service based on the second uplink delay budget

1110: Indicate the adjusted downlink frequency domain resource of the service and the adjusted downlink time domain resource of the service to the terminal device

1111: Indicate the adjusted uplink time domain resource of the service to the terminal device

FIG. 11

Frequency

$B1_U$

Time

$T1_U$

Increase a quantity of
uplink retransmissions
of a service

Frequency

$B1_U$

Time

$T2_U$

FIG. 12

1301: An access network device increases an uplink
transmission bandwidth of a service from a first
uplink transmission bandwidth to a second uplink
transmission bandwidth, where the second uplink
transmission bandwidth is less than or equal to a
target uplink transmission bandwidth, and the target
uplink transmission bandwidth is a smaller value
between a maximum uplink bandwidth supported
by a system and a maximum uplink bandwidth
supported by a terminal device

1302: The access network device reduces an uplink
delay budget of the service from a first uplink delay
budget to a second uplink delay budget based on
the second uplink transmission bandwidth

1303: The access network device increases a
downlink delay budget of the service from a first
downlink delay budget to a second downlink delay
budget based on the second uplink delay budget

FIG. 13

| Access network device | | Terminal device |
|---|---|---|

**1401:** Increase an uplink transmission bandwidth of a service from a first uplink transmission bandwidth to a second uplink transmission bandwidth, where the second uplink transmission bandwidth is less than or equal to a target uplink transmission bandwidth, and the target uplink transmission bandwidth is a smaller value between a maximum uplink bandwidth supported by a system and a maximum uplink bandwidth supported by the terminal device

**1402:** Increase an uplink transmit power of the service from a first uplink transmit power to a second uplink transmit power based on the first uplink transmission bandwidth and the second uplink transmission bandwidth

**1403:** Indicate the second uplink transmit power to the terminal device

**1404:** Reduce an uplink delay budget of the service from a first uplink delay budget to a second uplink delay budget based on the second uplink transmission bandwidth

**1405:** Increase a downlink delay budget of the service from a first downlink delay budget to a second downlink delay budget based on the second uplink delay budget

**1406:** Adjust a downlink transmission modulation and coding scheme MCS of the service from an MCS 1 to an MCS 2 based on the second downlink delay budget, where a modulation order of the MCS 2 is less than a modulation order of the MCS 1, or a code rate of the MCS 2 is less than a code rate of the MCS 1

**1407:** Indicate the MCS 2 to the terminal device

**1408:** Adjust an uplink frequency domain resource of the service based on the second uplink transmission bandwidth

**1409:** Adjust an uplink time domain resource of the service based on the second uplink delay budget

**1410:** Adjust a downlink time domain resource of the service based on the second downlink delay budget

**1411:** Indicate the adjusted uplink frequency domain resource of the service and the adjusted uplink time domain resource of the service to the terminal device

**1412:** Indicate the adjusted downlink time domain resource of the service to the terminal device

FIG. 14

| Access network device | | Terminal device |
|---|---|---|

1501: Increase an uplink transmission bandwidth of a service from a first uplink transmission bandwidth to a second uplink transmission bandwidth, where the second uplink transmission bandwidth is less than or equal to a target uplink transmission bandwidth, and the target uplink transmission bandwidth is a smaller value between a maximum uplink bandwidth supported by a system and a maximum uplink bandwidth supported by the terminal device

1502: Increase an uplink transmit power of the service from a first uplink transmit power to a second uplink transmit power based on the first uplink transmission bandwidth and the second uplink transmission bandwidth

1503: Indicate the second uplink transmit power to the terminal device

1504: Reduce an uplink delay budget of the service from a first uplink delay budget to a second uplink delay budget based on the second uplink transmission bandwidth

1505: Increase a downlink delay budget of the service from a first downlink delay budget to a second downlink delay budget based on the second uplink delay budget

1506: Reduce a downlink transmission bandwidth of the service from a first downlink transmission bandwidth to a second downlink transmission bandwidth based on the second downlink delay budget

1508: Indicate the adjusted downlink frequency domain resource of the service to the terminal device

1507: Adjust a downlink frequency domain resource of the service based on the second downlink transmission bandwidth

1509: Adjust an uplink frequency domain resource of the service based on the second uplink transmission bandwidth

1510: Adjust an uplink time domain resource of the service based on the second uplink delay budget

1511: Adjust a downlink time domain resource of the service based on the second downlink delay budget

1512: Indicate the adjusted uplink frequency domain resource of the service and the adjusted uplink time domain resource of the service to the terminal device

1513: Indicate the adjusted downlink time domain resource of the service to the terminal device

FIG. 15

| Access network device | | Terminal device |
|---|---|---|

1601: Increase an uplink transmission bandwidth of a service from a first uplink transmission bandwidth to a second uplink transmission bandwidth, where the second uplink transmission bandwidth is less than or equal to a target uplink transmission bandwidth, and the target uplink transmission bandwidth is a smaller value between a maximum uplink bandwidth supported by a system and a maximum uplink bandwidth supported by the terminal device

1602: Increase an uplink transmit power of the service from a first uplink transmit power to a second uplink transmit power based on the first uplink transmission bandwidth and the second uplink transmission bandwidth

1603: Indicate the second uplink transmit power to the terminal device

1604: Reduce an uplink delay budget of the service from a first uplink delay budget to a second uplink delay budget based on the second uplink transmission bandwidth

1605: Increase a downlink delay budget of the service from a first downlink delay budget to a second downlink delay budget based on the second uplink delay budget

1606: Increase a quantity of downlink retransmissions of the service from a first quantity of downlink retransmissions to a second quantity of downlink retransmissions based on the second downlink delay budget

1607: Adjust an uplink frequency domain resource of the service based on the second uplink transmission bandwidth

1608: Adjust an uplink time domain resource of the service based on the second uplink delay budget

1609: Adjust a downlink time domain resource of the service based on the second downlink delay budget

1610: Indicate the adjusted uplink frequency domain resource of the service and the adjusted uplink time domain resource of the service to the terminal device

1611: Indicate the adjusted downlink time domain resource of the service to the terminal device

FIG. 16

EP 4 277 346 A1

1701

Communication
unit

1702

Processing unit

Communication apparatus

FIG. 17

1810

Communication
interface

1820

Processor

1840

1830

Memory

Communication apparatus

FIG. 18

39

| INTERNATIONAL SEARCH REPORT | International application No. |
| --- | --- |
| | **PCT/CN2021/081344** |

| **A.** | **CLASSIFICATION OF SUBJECT MATTER** |
| --- | --- |

H04W 28/18(2009.01)i; H04W 16/04(2009.01)i; H04W 52/04(2009.01)i

According to International Patent Classification (IPC) or to both national classification and IPC

| **B.** | **FIELDS SEARCHED** |
| --- | --- |

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNPAT, CNKI, EPODOC, WPI, 3GPP: 时延预算, 延时预算, 延迟预算, 上行, 下行, 带宽, 提升, 调整, 改变, delay, latency, budget?, uplink, downlink, bandwidth, modify, change

| **C.** | **DOCUMENTS CONSIDERED TO BE RELEVANT** | |
| --- | --- | --- |

| Category* | Citation of document, with indication, where appropriate, of the relevant passages | Relevant to claim No. |
| --- | --- | --- |
| A | CN 102905374 A (HUAWEI TECHNOLOGIES CO., LTD.) 30 January 2013 (2013-01-30) description, paragraphs [0044]-[0056] | 1-25 |
| A | CN 111656850 A (QUALCOMM INC.) 11 September 2020 (2020-09-11) entire document | 1-25 |
| A | CN 105591795 A (HANGZHOU H3C TECHNOLOGIES CO., LTD.) 18 May 2016 (2016-05-18) entire document | 1-25 |
| A | WO 2019095366 A1 (QUALCOMM INC.) 23 May 2019 (2019-05-23) entire document | 1-25 |
| A | HUAWEI et al. "Enhancements to Scheduling/HARQ/CSI Processing Timeline for URLLC" *3GPP TSG RAN WG1 Meeting #96 R1-1903227*, 01 March 2019 (2019-03-01), entire document | 1-25 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 October 2021** | **25 November 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/081344**

| Patent document cited in search report | | | Publication date (day/month/year) | Patent family member(s) | | | Publication date (day/month/year) |
|---|---|---|---|---|---|---|---|
| CN | 102905374 | A | 30 January 2013 | WO | 2014056384 | A1 | 17 April 2014 |
| | | | | JP | 2015534792 | A | 03 December 2015 |
| CN | 111656850 | A | 11 September 2020 | WO | 2019147438 | A1 | 01 August 2019 |
| | | | | EP | 3744151 | A1 | 02 December 2020 |
| | | | | US | 2019239097 | A1 | 01 August 2019 |
| | | | | IN | 202047026768 | A | 24 July 2020 |
| CN | 105591795 | A | 18 May 2016 | | None | | |
| WO | 2019095366 | A1 | 23 May 2019 | CN | 111373677 | A | 03 July 2020 |
| | | | | EP | 3714565 | A1 | 30 September 2020 |
| | | | | US | 2020313802 | A1 | 01 October 2020 |
| | | | | IN | 202047017284 | A | 05 June 2020 |

Form PCT/ISA/210 (patent family annex) (January 2015)